(19) Europäisches Patentamt / European Patent Office / Office européen des brevets

(11) **EP 4 280 304 A1**

(12) **EUROPEAN PATENT APPLICATION**
published in accordance with Art. 153(4) EPC

(43) Date of publication:
**22.11.2023 Bulletin 2023/47**

(21) Application number: **22903123.2**

(22) Date of filing: **09.11.2022**

(51) International Patent Classification (IPC):
**H01M 4/525** (2010.01)

(52) Cooperative Patent Classification (CPC):
**H01M 4/525; H01M 10/0525; Y02E 60/10**

(86) International application number:
**PCT/CN2022/130946**

(87) International publication number:
**WO 2023/103700 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2021 CN 202111491138**

(71) Applicant: **BTR NANO TECH CO., LTD.**
**Shenzhen, Guangdong 518106 (CN)**

(72) Inventors:
• **WEN, Weicheng**
**Shenzhen, Guangdong 518106 (CN)**
• **ZHENG, Yu**
**Shenzhen, Guangdong 518106 (CN)**
• **YANG, Shunyi**
**Shenzhen, Guangdong 518106 (CN)**
• **HUANG, Youyuan**
**Shenzhen, Guangdong 518106 (CN)**

(74) Representative: **Fioravanti, Corrado et al**
**Jacobacci & Partners S.p.A.**
**Corso Emilia 8**
**10152 Torino (IT)**

(54) **NICKEL-RICH POSITIVE ELECTRODE MATERIAL, PREPARATION METHOD THEREFOR, AND LITHIUM ION BATTERY**

(57) The present disclosure relates to a high-nickel positive electrode material and a preparation method therefor and a lithium ion battery, wherein a general chemical formula of the high-nickel positive electrode material is represented by formula (1): $Li_xNi_{1-(a+b+c+d+e+f)}Co_aM1_bM2_cM3_dM4_eM5_fO_2$ (1), where $0.95 \leq x \leq 1.2$, $0 \leq a \leq 0.15$, $0 \leq b \leq 0.10$, $0 \leq c \leq 0.05$, $0 \leq d \leq 0.05$, $0 \leq e \leq 0.05$, $0 \leq f \leq 0.05$, and $0 < a+b+c+d+e+f \leq 0.2$. There is a relatively small amount of $Ni^{3+}$ and a relatively large amount of $Ni^{2+}$ in the surface of the high-nickel material in the present disclosure, which can avoid oxidation of the surface of the positive electrode material during lithium deintercalation, and facilitate maintaining structural stability of the positive electrode material, thereby avoiding loss of the positive electrode active material and the electrolytic solution, and further improving the capacity of the positive electrode material, so that the high-temperature cycle performance of the high-nickel positive electrode material is obviously improved.

FIG. 2

## Description

## Cross-reference to Related Application

The present disclosure claims the priority to the Chinese patent application with the filing No. "CN202111491138.2" filed with the Chinese Patent Office on December 8, 2021, and entitled "Nickel-rich Positive Electrode Material, Preparation Method therefor, and Lithium Ion Battery", the contents of which are incorporated herein by reference in entirety.

## Technical Field

The present disclosure belongs to the technical field of positive electrode materials, and particularly relates to a high-nickel positive electrode material (i.e., a nickel-rich positive electrode material) and a preparation method therefor, and a lithium ion battery.

## Background Art

The lithium ion battery, having a high energy density, a good safety performance, and a long cycle life, and being environmentally friendly, is widely used in the fields such as notebook computers, mobile phones, and digital products; meanwhile, with the enhancement of people's environmental consciousness, the lithium ion battery is gradually used as a power battery in the field of transportation means, such as electric automobiles and electric buses, and the market also puts forward higher and higher requirements on specific capacity, energy density, power density, service lifetime and the like of the lithium ion batteries, especially the specific capacity. The positive electrode materials used the most in the lithium ion battery are mainly $LiFePO_4$ being of an olivine structure, $LiCoO_2$ being of a layered structure, and lithium-nickel oxide materials being of a layered structure. $LiFePO_4$ being of an olivine structure has reached the capacity limit, and subsequent main applications thereof are in the fields of energy storage and low-endurance electric vehicles; $LiCoO_2$ being of a layered structure is mainly used in the field of consumer batteries; and the lithium-nickel oxide materials are widely applied in the field of electric automobiles. In the lithium-nickel oxide materials, nickel is a main redox reaction element, and increasing the nickel content can effectively increase the specific capacity of such type of materials, and therefore, to develop a high-nickel material becomes a market trend.

Main factors currently restricting wide application of high-nickel ternary material in the power battery are poor high-temperature performance, rapid DC (direct-current) internal resistance increase, and gas generation; and reasons causing these unfavorable factors are mainly in three aspects, wherein firstly, an intrinsic structure of the high-nickel ternary material is gradually changed irreversibly with charging and discharging, and the higher the nickel content is, the larger the structural change occurs. In the process of charging and discharging the high-nickel material, valence of nickel will be changed correspondingly, corresponding to deintercalation and intercalation of lithium ions. Under the same voltage, the higher the nickel content is, the more the lithium ions are extracted, the larger the volume change of the material is, and the volume change will be accompanied by release of internal stress of the material, thus causing appearance of cracks of the high-nickel material. In particular, for the high-nickel material in a charging state, an electrolytic solution will enter the interior of the material through the cracks, and have a redox reaction with high-activity $Ni^{4+}$, thereby causing change to material structure. Secondly, when the high-nickel ternary material is delithiated, $Ni^{3+}$ in the material surface will be converted into $Ni^{4+}$ with strong oxidability, and $Ni^{4+}$ is prone to redox reaction with an organic electrolytic solution, so that positive electrode active substances and the electrolytic solution are lost, thereby causing capacity attenuation, DC internal resistance increase, and gas generation. Finally, the high-nickel ternary material tends to generate alkaline impurities (including residual $Li_2CO_3$ and LiOH and the like in the material surface) in a synthesizing process, and these alkaline impurities are non-conductive and prone to reaction with the electrolytic solution, thus causing the gas generation of the battery and the battery polarization.

Therefore, in order to improve the wide application of the high-nickel ternary material in the power battery, there is now an urgent need for a high-nickel positive electrode material capable of addressing the poor high-temperature performance, rapid DC internal resistance increase, and gas generation.

## Summary

The present disclosure provides a high-nickel positive electrode material, wherein a general chemical formula of the high-nickel positive electrode material is represented by formula (1):

$$Li_xNi_{1-(a+b+c+d+e+f)}Co_aM1_bM2_cM3_dM4_eM5_fO_2 \qquad (1),$$

where $0.95 \leq x \leq 1.2$, $0 \leq a \leq 0.15$, $0 \leq b \leq 0.10$, $0 \leq c \leq 0.05$, $0 \leq d \leq 0.05$, $0 \leq e \leq 0.05$, $0 \leq f \leq 0.05$, and $0 < a+b+c+d+e+f \leq 0.2$; and the high-nickel positive electrode material is subjected to powder XPS measurement using $AlK\alpha$ rays, and after peak separation and fitting are performed on $Ni2P_{3/2}$ peak appearing when a binding energy is in a range of 850 eV~870 eV, a peak area of $Ni^{2+}$ is set to be S1, a peak area of $Ni^{3+}$ is set to be S2, a peak width at half height of $Ni^{2+}$ is set to be $\alpha$, a peak width at half height of $Ni^{3+}$ is set to be $\beta$, and S1, S2, $\alpha$, and $\beta$ satisfy the following relationships:

$$S1/(S1+S2)>0.5 \text{ and } 0.9<\alpha/\beta<1.5 \quad (2).$$

Optionally, the positive electrode material includes a secondary particle and/or a primary particle, at least a part of surface of the primary particle is coated with a coating layer, and the secondary particle includes a plurality of primary particles with the coating layer.

Optionally, the coating layer includes a first coating layer and a second coating layer, the first coating layer is formed on the surface of the primary particle, and the second coating layer is formed on a surface of the first coating layer.

Optionally, the coating layer includes a first coating layer, and the first coating layer is formed on the surface of the primary particle.

Optionally, the coating layer includes a second coating layer, and the second coating layer is formed on the surface of the primary particle.

Optionally, the coating layer includes a first coating layer and a second coating layer, and the first coating layer includes an element with a valence greater than or equal to positive trivalence in the high-nickel positive electrode material.

Optionally, the coating layer includes a first coating layer and a second coating layer, and the first coating layer includes at least one of Al, Ti, P, Si, Nb, Y, W, Cr, Zr, and La.

Optionally, the coating layer includes a first coating layer and a second coating layer, and the first coating layer includes a compound containing at least one of Al, Ti, P, Si, Nb, Y, W, Cr, Zr, and La.

Optionally, the coating layer includes a first coating layer and a second coating layer, the first coating layer includes a compound containing at least one of Al, Ti, P, Si, Nb, Y, W, Cr, Zr, and La, and the compound is at least one of oxide, hydroxide, and salt.

Optionally, the coating layer includes a first coating layer and a second coating layer, and the second coating layer includes a compound containing at least one of B, La, and Al.

Optionally, the coating layer includes a first coating layer and a second coating layer, the second coating layer includes a compound containing at least one of B, La, and Al, and the compound is at least one of oxide, acid, and lithium-containing salt.

Optionally, the coating layer includes a first coating layer and a second coating layer, and the second coating layer includes a boron-containing compound.

Optionally, the coating layer includes a first coating layer and a second coating layer, the second coating layer includes a boron-containing compound, and the boron-containing compound includes at least one of boron-containing oxide, boron-containing acid, and salt containing boron and lithium.

Optionally, the coating layer includes a first coating layer and a second coating layer, the second coating layer includes a boron-containing compound, and the boron-containing compound includes at least one of $B_2O_3$, $H_3BO_3$, $Li_2O$-$B_2O_3$, $Li_3BO_3$, $Li_2B_4O_7$, $Li_2B_2O_7$, and $Li_2B_8O_{13}$.

Optionally, the M1 includes Mn and/or Al.

Optionally, the M2 includes an element with a valence greater than or equal to positive tetravalence in the high-nickel positive electrode material.

Optionally, the M3 includes an element with a valence equal to positive bivalence in the high-nickel positive electrode material.

Optionally, the M2 and the M3 each include at least one of Zr, Ti, Nb, Ce, Hf, W, Mo, Ta, Ge, Sn, Sr, Mg, and Ba, and M2 and M3 are different.

Optionally, the M4 includes an element with a valence greater than or equal to positive trivalence in the high-nickel positive electrode material.

Optionally, the M4 includes at least one of Al, Ti, P, Si, Nb, Y, W, Cr, Zr, and La.

Optionally, the M5 includes at least one of B, La, and A.

Optionally, the M5 includes B.

Optionally, the high-nickel positive electrode material is subjected to powder XPS measurement using $AlK\alpha$ rays: after peak separation and fitting are performed on $Ni2P_{3/2}$ peak appearing when the binding energy is in the range of 850 eV~870 eV, an area ratio of $Ni^{2+}/Ni^{3+}$ is greater than 1.

Optionally, the high-nickel positive electrode material is subjected to powder XPS measurement using $AlK\alpha$ rays: when peak separation and fitting are performed on O1S peak appearing when a binding energy is in a range of 526 eV~540 eV, an area ratio of $O1S_{lattice\ oxygen}/O1S_{impurity\ oxygen}$ is greater than 1/2.

Optionally, a mass content of LiOH in the high-nickel positive electrode material is less than 0.3 wt%.

Optionally, a mass content of $Li_2CO_3$ in the high-nickel positive electrode material is less than 0.3 wt%.

Optionally, a crystal structure of the high-nickel positive electrode material belongs to a hexagonal crystal structure or a monoclinic crystal structure.

Optionally, crystal particle morphology of the high-nickel positive electrode material includes at least one of an approximate spherical shape, an approximate cubic shape, and an approximate rectangular parallelepiped shape.

Optionally, pH of the high-nickel positive electrode material is: 10<pH<12.

Optionally, pH of the high-nickel positive electrode material is: 10.5<pH<11.7.

Optionally, a powder conductivity of the high-nickel positive electrode material is greater than 0.02 S/cm.

Optionally, a specific surface area of the high-nickel positive electrode material is 0.3 $m^2$/g~0.8 $m^2$/g.

Optionally, an average particle size of the high-nickel positive electrode material is 2.5 $\mu$m~4.5 $\mu$m.

The present disclosure further discloses a preparation method for a high-nickel positive electrode material, including steps of:

mixing a metal composite hydroxide precursor, a lithium-containing compound, and a dopant, and then performing a primary heat treatment to obtain a matrix material, wherein

the dopant includes a compound containing an element M2 and a compound containing an element M3, the compound containing the element M2 is at least one of an oxide, a hydroxide, and a lithium metal oxide only containing the M2, and a valence of the M2 in the compound is greater than or equal to positive tetravalence, the compound containing the element M3 is at least one of an oxide and a hydroxide only containing the M3, and a valence of the M3 in the compound is positive bivalence; and

coating the matrix material to obtain the high-nickel positive electrode material.

Optionally, a mass ratio of the metal composite hydroxide precursor, the lithium-containing compound, and the dopant is 1:(0.46~0.49):(0.001~0.005).

Optionally, a mass ratio of the metal composite hydroxide precursor, the lithium-containing compound, and the dopant is 1:(0.46~0.48):(0.001~0.003).

Optionally, an atomic ratio of total metal Me in the metal composite hydroxide precursor to Li in the lithium-containing compound is 1.0<Li/Me<1.2.

Optionally, the lithium-containing compound includes a lithium-containing salt and a lithium-containing hydroxide.

Optionally, the lithium-containing compound includes at least one of lithium carbonate, lithium hydroxide, lithium nitrate, and lithium acetate.

Optionally, the element M2 and the element M3 are each at least one selected from Zr, Ti, Nb, Ce, Hf, W, Mo, Ta, Ge, Sn, Sr, Mg, and Ba, and M2 and M3 are different.

Optionally, a molar ratio $n_{M2}$:$n_{M3}$ of the M2 to the M3 is greater than or equal to 2:1.

Optionally, an average particle size of the dopant is 10 nm~50 nm.

Optionally, a temperature of the primary heat treatment is 680 °C~900 °C.

Optionally, time of the primary heat treatment is 5 h~20 h.

Optionally, a heating rate of the primary heat treatment is 50 °C/h~550 °C/h.

Optionally, an oxygen content of the matrix material is greater than or equal to 85%.

Optionally, the method includes a step of mixing the matrix material and a first coating agent, and then performing a secondary heat treatment to obtain a primary coating resultant.

Optionally, the method includes: a mass ratio of the matrix material to the first coating agent is 1000:(0.5~3).

Optionally, the method includes: the first coating agent includes a metal element or a non-metal element with a valence greater than or equal to positive trivalence.

Optionally, the method includes: the first coating agent includes at least one of an oxide, a salt, or a hydroxide of a metal element or a non-metal element with a valence greater than or equal to positive trivalence.

Optionally, the method includes: the first coating agent includes a metal element or a non-metal element with a valence greater than or equal to positive trivalence, and the metal element or the non-metal element includes at least one of Al, Ti, P, Si, Nb, Y, W, Cr, Zr, or La.

Optionally, the method includes: the first coating agent is at least one of lithium aluminate, lithium titanate, lithium lanthanum titanate, yttrium oxide, aluminum oxide, and titanium oxide.

Optionally, the method includes: an average particle size of the first coating agent is 10 nm~50 nm.

Optionally, the method includes: a temperature of the secondary heat treatment is 600 °C~800 °C.

Optionally, the method includes: time of the secondary heat treatment is 1 h~20 h.

Optionally, the method includes: a heating rate of the secondary heat treatment is 50 °C/h~550 °C/h.

Optionally, the method includes: after the secondary heat treatment, a step of washing under a constant-temperature condition, and performing a drying treatment under a vacuum condition after the washing is further included, and a temperature of the constant-temperature condition is 10 °C~25 °C.

Optionally, the method includes: after the secondary heat treatment, a step of washing under a constant-temperature condition, and performing a drying treatment under a vacuum condition after the washing is further included, and a temperature of the drying treatment is 100 °C~200 °C.

Optionally, the method includes: an oxygen content of the primary coating resultant is greater than or equal to 85%.

Optionally, the method further includes a step of mixing the primary coating resultant and a second coating agent and then performing a tertiary heat treatment.

Optionally, the method includes: the second coating agent includes a compound containing at least one of B, La, and Al. Optionally, the method includes: the second coating agent includes a compound containing at least one of B, La, and Al, and the compound is an oxide, an acid, or a lithium-containing salt.

Optionally, the method includes: the second coating agent includes a boron-containing compound.

Optionally, the method includes: the second coating agent includes a boron-containing compound, and the boron-containing compound includes a boron-containing oxide, a boron-containing acid, or a salt containing boron and lithium.

Optionally, the method includes: the second coating agent includes a boron-containing compound, and the boron-containing compound includes at least one of $B_2O_3$, $H_3BO_3$, $Li_2O-B_2O_3$, $Li_3BO_3$, $Li_2B_4O_7$, $Li_2B_2O_7$, and $Li_2B_8O_{13}$.

Optionally, the method includes: a mass ratio of the primary coating resultant to the second coating agent is 1:(0.0005-0.005).

Optionally, the method includes: a temperature of the tertiary heat treatment is 200 °C~600 °C.

Optionally, the method includes: time of the tertiary heat treatment is 1 h~20 h.

Optionally, the method includes: a heating rate of the tertiary heat treatment is 50 °C/h~550 °C/h.

Optionally, the metal composite hydroxide precursor is obtained by performing a mixing treatment on a metal salt solution, a complexing agent, and a pH regulator.

Optionally, the method includes: a mass ratio of the metal salt solution, the complexing agent, and the pH regulator is 1-(0.01~0.10)-(0.1~0.8).

Optionally, the method includes: the metal salt solution includes at least one of a nickel salt solution, a cobalt salt solution, a manganese salt solution, and an aluminum salt solution.

Optionally, the method includes: the complexing agent includes at least one of ammonia, ammonium sulfate, ammonium chloride, ammonium carbonate, ammonium fluoride, hydrazine, ethylenediamine tetraacetic acid, nitrilotriacetic acid, uracil diacetic acid, and glycine.

Optionally, the method includes: the pH regulator includes at least one of sodium hydroxide and potassium hydroxide.

Optionally, the method includes: pH of the mixing treatment is 9-13.

Optionally, the method includes: a temperature of the mixing treatment is 10 °C~80 °C.

Optionally, the method includes: time of the mixing treatment is 10 h~200 h.

Optionally, the method includes: the mixing treatment is performed in a stirring state at a stirring rate of 800 rpm~1200 rpm.

Optionally, the method includes: after the mixing treatment, steps of solid-liquid separation, washing, and drying are further included.

Optionally, the method includes: an average particle size of the metal composite hydroxide precursor is 3 $\mu$m~10 $\mu$m.

The present disclosure further discloses a lithium ion battery, wherein the lithium ion battery includes the above high-nickel positive electrode material or the high-nickel positive electrode material prepared by the above method.

## Brief Description of Drawings

In order to illustrate the technical solutions of the embodiments of the present disclosure or the prior art more clearly, drawings that need to be used in the description of the embodiments or the prior art are introduced briefly below, obviously, the drawings in the following description are only some embodiments of the present disclosure, those ordinarily skilled in the art still could obtain other drawings in light of these drawings, without using any creative efforts. Meanwhile, the following drawings only exemplarily illustrate the embodiments of the present disclosure, dimensional ratios in the drawings do not directly correspond to real ratios in the embodiments, and at the same time, the following drawings only show some embodiments of the present disclosure, and therefore should not be regarded as limitation to the scope.

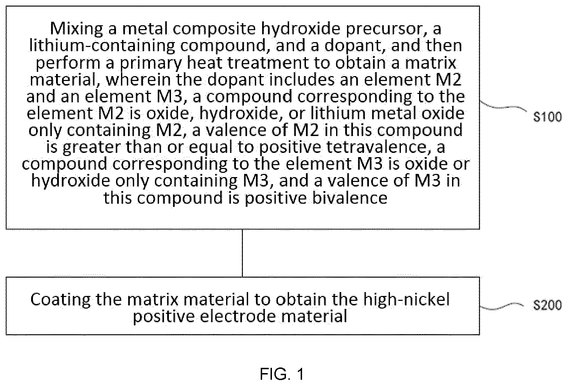

FIG. 1 is a flowchart of preparing a high-nickel positive electrode material in some embodiments of the present disclosure;

FIG. 2 is an SEM diagram of the high-nickel positive electrode material in some embodiments of the present disclosure;

FIG. 3 is a diagram of performing peak separation and curve fitting on $Ni2P_{3/2}$ peak of a Ni bonded portion of the high-nickel positive electrode material at a position where a binding energy is 850 eV~870 eV in Example 1 of the present disclosure;

FIG. 4 is a diagram of performing peak separation and curve fitting on $Ni2P_{3/2}$ peak of a Ni bonded portion of the high-nickel positive electrode material at a position where a binding energy is 850 eV~870 eV in Example 8 of the present disclosure;

FIG. 5 is a diagram of performing peak separation and curve fitting on $Ni2P_{3/2}$ peak of a Ni bonded portion of a high-nickel positive electrode material at a position where a binding energy is 850 eV~870 eV in Comparative Example 1;

FIG. 6 is a diagram of performing peak separation and curve fitting on $Ni2P_{3/2}$ peak of a Ni bonded portion of a high-nickel positive electrode material at a position where a binding energy is 850 eV~870 eV in Comparative Example 2;

FIG. 7 is a diagram of performing peak separation and curve fitting on O1S peak of an O bonded portion of the high-nickel positive electrode material at a position where a binding energy is 526 eV~540 eV in Example 1 of the present disclosure;

FIG. 8 is a diagram of performing peak separation and curve fitting on O1S peak of an O bonded portion of the high-nickel positive electrode material at a position where a binding energy is 526 eV~540 eV in Example 8 of the present disclosure;

FIG. 9 is a diagram of performing peak separation and curve fitting on O1S peak of an O bonded portion of a high-nickel positive electrode material at a position where a binding energy is 526 eV~540 eV in Comparative Example 1;

FIG. 10 is a diagram of performing peak separation and curve fitting on O1S peak of an O bonded portion of a high-nickel positive electrode material at a position where a binding energy is 526 eV~540 eV in Comparative Example 2;

FIG. 11 is a graph of capacity differential curves of the high-nickel positive electrode material in Example 1 of the present disclosure;

FIG. 12 is a graph of capacity differential curves of the high-nickel positive electrode material in Example 8 of the present disclosure;

FIG. 13 is a graph of capacity differential curves of the high-nickel positive electrode material in Comparative Example 1;

FIG. 14 is a graph of capacity differential curves of the high-nickel positive electrode material in Comparative Example 2;

FIG. 15 is an SEM diagram of argon ion section analysis of the high-nickel positive electrode material in Example 1 of the present disclosure after 300 cycles;

FIG. 16 is an SEM diagram of argon ion section analysis of the high-nickel positive electrode material in Example 8 of the present disclosure after 300 cycles;

FIG. 17 is an SEM diagram of argon ion section analysis of the high-nickel positive electrode material in Comparative Example 1 after 300 cycles;

FIG. 18 is an SEM diagram of argon ion section analysis of the high-nickel positive electrode material in Comparative Example 2 after 300 cycles;

FIG. 19 is an SEM diagram of argon ion section analysis of the high-nickel positive electrode material in Example 25 of the present disclosure after 300 cycles;

FIG. 20 is an SEM diagram of argon ion section analysis of the high-nickel positive electrode material in Example 26 of the present disclosure after 300 cycles;

FIG. 21 is an SEM diagram of argon ion section analysis of the high-nickel positive electrode material in Comparative Example 6 of the present disclosure after 300 cycles;

FIG. 22 is a structural schematic diagram of a partial section of the high-nickel positive electrode material provided in some embodiments of the present disclosure;

FIG. 23 is a structural schematic diagram of a partial section of the high-nickel positive electrode material provided in some embodiments of the present disclosure;

FIG. 24 is a structural schematic diagram of a partial section of the high-nickel positive electrode material provided in some embodiments of the present disclosure;

FIG. 25 is a structural schematic diagram of a partial section of the high-nickel positive electrode material provided in some embodiments of the present disclosure; and

FIG. 26 is a structural schematic diagram of a partial section of the high-nickel positive electrode material provided in some embodiments of the present disclosure.

Reference signs: 100-positive electrode material, 120-particle, 122-primary particle, 124-secondary particle, 140-coating layer, 142-first coating layer, 144-second coating layer.

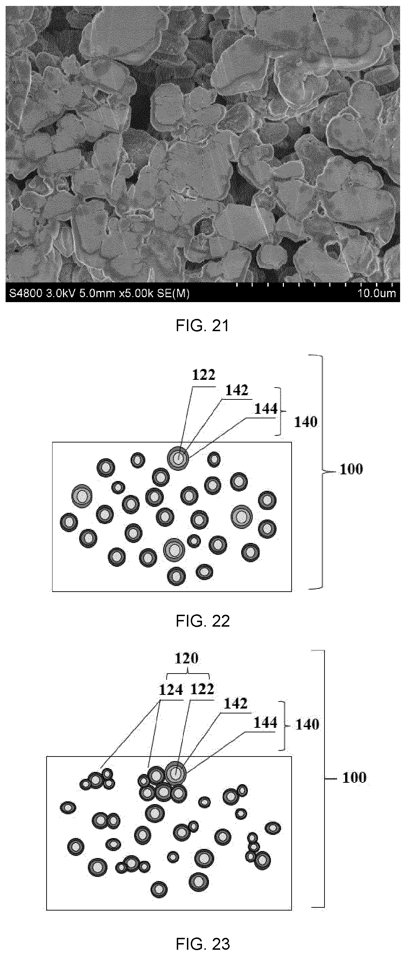

It should be noted that rectangular boundary lines in FIGS. 22-26 are merely used to exemplarily indicate sectional views of a part (a certain random field of view) of the high-nickel positive electrode material.

**Detailed Description of Embodiments**

In order to better under the technical solutions of the present disclosure, the embodiments and examples in the present disclosure are described in detail below in combination with the drawings.

It should be noted that the embodiments and examples described are only some embodiments and examples of the present disclosure, rather than all embodiments and examples. Based on the embodiments and examples in the present disclosure, all of other embodiments and examples obtained by those ordinarily skilled in the art without using any creative efforts shall fall within the scope of protection of the present disclosure.

In addition, terms "first" and "second" are used for descriptive purposes only, and should not be understood as an indication or implication of importance in the relativity or an implicit indication of the amount of the indicated technical features. Thus, a feature defined with "first" and "second" may explicitly or implicitly include one or more such features.

In order to make it easy to understand the present disclosure, specific terms are appropriately defined in the present disclosure. Unless otherwise defined herein, scientific terms and technical terms used in the present disclosure have meanings that are commonly understood by those skilled in the art.

Term "matrix" as used herein refers to a lithium-based composite oxide synthesized by a high-temperature solid phase reaction after mixing a precursor and a lithium salt, and includes lithium and metal elements.

As used herein, term "primary particle" refers to a particle that exists alone and does not form an agglomerate.

As used herein, term "secondary particle" refers to a particle agglomerated by the above primary particle.

NCM ternary positive electrode material can be understood as a solid solution of $LiCoO_2$, $LiNi_{0.5}Mn_{0.5}O_2$, and $LiNiO_2$, which corresponds to a general formula $Li_{1+a}[Ni_z(Ni_{1/2}Mn_{1/2})_yCO_x]_{1-a}O_2$, where Z represents a proportion of $Ni^{3+}$. For example, $LiNi_{0.6}Co_{0.2}Mn_{0.2}O_2$ can be understood as $0.2LiCoO_2+0.4LiNi_{0.5}Mn_{0.5}O_2+0.4LiNiO_2$, and therefore, the proportion of $Ni^{3+}$ is 0.4. The proportion of $Ni^{3+}$ in other high-nickel materials such as $LiNi_{0.885}Co_{0.09}Mn_{0.025}O_2$ is 0.86, and the proportion of $Ni^{3+}$ in $LiNi_{0.8}Co_{0.15}Al_{0.05}O_2$ is 0.8. With regard to synthesis of the high-nickel material, since the proportion of $Ni^{3+}$ contained is high, an oxygen content required in the synthesizing process thereof is also high, because only in this way, $Ni^{2+}$ in the precursor can be oxidized to $Ni^{3+}$, for example, $LiNi_{0.885}Co_{0.09}Mn_{0.025}O_2$ and $LiNi_{0.8}Co_{0.15}Al_{0.05}O_2$ can be synthesized only under a high-concentration oxygen atmosphere, while $LiNi_{0.4}Co_{0.2}Mn_{0.4}O_2$, in which the proportion of $Ni^{3+}$ is 0, can be synthesized just under an air atmosphere, and there are few alkaline impurities in a material surface. The synthesized high-nickel material is quite sensitive to moisture in air, which is mainly because the proportion of $Ni^{3+}$ in the high-nickel material is relatively high, so that lithium in the high-nickel material is prone to a proton exchange reaction with water in the air to generate LiOH, while middle- and low-nickel materials with a low proportion of $Ni^{3+}$ are difficult to undergo the proton exchange reaction, therefore, the high-nickel material must be produced and stored in a low humidity environment. When a battery is made of a high-nickel material, after the battery is charged, $Ni^{3+}$ in the material will be converted into $Ni^{4+}$, and the strong oxidizing property of $Ni^{4+}$ will cause a redox reaction with an electrolytic solution in direct contact, that is, $Ni^{4+}+electrolyte \rightarrow Ni^{2+}+\{H_2O, CO_2\}$, and gas is generated to cause the battery to bump. At the same time, loss of the positive electrode active material will cause battery capacity attenuation. Since the high-nickel material necessarily contains a high proportion of $Ni^{3+}$, and $Ni^{3+}$ in a surface layer (5 nm~10 nm) of the high-nickel material is in direct contact with the electrolytic solution or air, how to well control the proportion of $Ni^{3+}$ in the surface layer of the high-nickel material is of great significance for improving the high-temperature cycle performance of the high-nickel material, reducing the gas generation of the material, reducing the alkaline impurities in the material surface, and reducing the DC internal resistance increase.

Therefore, the present disclosure provides a high-nickel positive electrode material and a preparation method therefor and a lithium ion battery, wherein the high-nickel positive electrode material in the present disclosure has a small amount of $Ni^{3+}$ and a large amount of $Ni^{2+}$ in a surface thereof, and oxidation of the surface of the high-nickel positive electrode material can be avoided during lithium deintercalation, so that the high-temperature cycle performance and structural stability of the high-nickel positive electrode material can be improved.

## I. Positive Electrode Material

An embodiment of the present disclosure provides a high-nickel positive electrode material, wherein a general chemical formula of the positive electrode material is represented by formula (1):

$$Li_xNi_{1-(a+b+c+d+e+f)}CO_aM1_bM2_cM3_dM4_eM5_fO_2 \qquad (1),$$

where $0.95 \leq x \leq 1.2$, $0 \leq a \leq 0.15$, $0 \leq b \leq 0.10$, $0 \leq c \leq 0.05$, $0 \leq d \leq 0.05$, $0 \leq e \leq 0.05$, $0 \leq f \leq 0.05$, and $0 < a+b+c+d+e+f \leq 0.2$.

The high-nickel positive electrode material is subjected to powder XPS measurement using $AlK\alpha$ rays, and after peak separation and fitting are performed on $Ni2P_{3/2}$ peak appearing when a binding energy is in a range of 850 eV~870 eV, a peak area of $Ni^{2+}$ is set to be S1, a peak area of $Ni^{3+}$ is set to be S2, a peak width at half height of $Ni^{2+}$ is set to be $\alpha$ (or denoted by a, different from a in the above general chemical formula), a peak width at half height of $Ni^{3+}$ is set to be $\beta$ (or denoted by b, different from b in the above general chemical formula), and S1, S2, $\alpha$(a), and $\beta$(b) satisfy the following relationships:

$$S1/(S1+S2) > 0.5 \text{ and } 0.9 < \alpha/\beta < 1.5 \text{ (i.e., which can also be expressed as } S1/(S1+S2) > 0.5 \text{ and } 0.9 < a/b < 1.5) \qquad (2).$$

In the above technical solution, upon the XPS measurement, the high-nickel positive electrode material in the present disclosure satisfies the following relationships: $S1/(S1+S2) > 0.5$ and $0.9 < \alpha/\beta < 1.5$, indicating that there is a relatively small amount of $Ni^{3+}$ and a relatively large amount of $Ni^{2+}$ in the surface of the high-nickel positive electrode material in the present disclosure, which can avoid oxidation of the surface of the high-nickel positive electrode material during lithium deintercalation, and facilitate maintaining structural stability of the positive electrode material, thereby avoiding loss of the positive electrode active material and the electrolytic solution during charging and discharging, and further improving the capacity of the positive electrode material, so that the high-temperature cycle performance of the high-nickel positive electrode material is obviously improved. In addition, since the amount of $Ni^{3+}$ is relatively small and the amount of $Ni^{2+}$ is relatively large in the material surface, internal cracks of the material during charging and discharging can be reduced, so that an internal structure of the material is stable, and then when the positive electrode material in the present disclosure is applied to a battery for long-term cycle, the DC internal resistance increase of the battery is obviously inhibited.

## (1) Structure of the positive electrode material

In some embodiments, the positive electrode material 100 includes: a particle 120; and a coating layer 140, wherein the coating layer 140 is formed on a surface of the particle 120.

In some embodiments, the particle 120 includes a secondary particle 124 and/or a primary particle 122, wherein at least a part of surface of the primary particle 122 is coated with the coating layer 140, and the secondary particle 124 includes a plurality of primary particles 122 with the coating layer 140.

In some embodiments, the positive electrode material 100 includes the secondary particle 124 and/or the primary particle 122, at least a part of surface of the primary particle 122 is coated with the coating layer 140, and the secondary particle 124 includes a plurality of primary particles 122 with the coating layer 140. It can be understood that the secondary particle 124 is an aggregate of a plurality of primary particles 122, and the positive electrode material 100 in the present disclosure may include only the primary particle 122 or only the secondary particle 124, or may be a mixture of the primary particle 122 and the secondary particle 124.

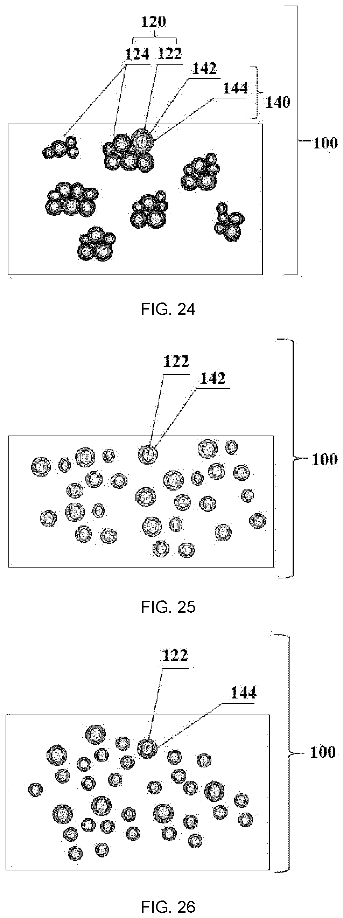

In some embodiments, referring to FIG. 22, the coating layer 140 includes a first coating layer 142 and a second coating layer 144, the first coating layer 142 is formed on the surface of the primary particle 122, and the second coating layer 144 is formed on a surface of the first coating layer 142. In some embodiments, referring to FIG. 25, only the first coating layer 142 is formed on the surface of the primary particle 122. In some embodiments, referring to FIG. 26, only the second coating layer 144 is formed on the surface of the primary particle 122. The first coating layer 142 can improve structural stability of the material surface, and the second coating layer 144 can effectively improve processability and electrical conductivity of the material.

Referring to FIG. 23, in some embodiments, the positive electrode material 100 includes: the primary particle 122; the secondary particle 124; and the coating layer 140, the coating layer includes the first coating layer 142 and the second coating layer 144; the first coating layer 142 is formed on the surface of the primary particle 122, and the second coating layer 144 is formed on the surface of the first coating layer 142; and the secondary particle includes a plurality of primary particles 122 with the coating layer 140.

In some embodiments, the positive electrode material 100 includes: the secondary particle 124, and the secondary particle 124 includes a plurality of primary particles 122; and the surface of each primary particle 122 is coated with the coating layer 140.

Referring to FIG. 24, in some embodiments, the positive electrode material 100 includes: the secondary particle 124, and the secondary particle 124 includes a plurality of primary particles 122; the surface of the primary particle 122 is coated with the coating layer 140; the coating layer 140 includes the first coating layer 142 and the second coating layer 144; and the first coating layer 142 is formed on the surface of the primary particle 122, and the second coating layer 144 is formed on the surface of the first coating layer 142.

**(2) Components in the positive electrode material**

In some embodiments, the first coating layer 142 includes an element with a valence greater than or equal to positive trivalence in the high-nickel positive electrode material 100.

In some embodiments, the first coating layer 142 includes at least one of Al, Ti, P, Si, Nb, Y, W, Cr, Zr, and La. Valences of the above elements in the high-nickel positive electrode material 100 are greater than or equal to positive trivalence, so that the amount of $Ni^{2+}$ in the surface layer of the high-nickel positive electrode material 100 is unchanged or further increased, thus improving the structural stability of the positive electrode material 100, and meanwhile also reducing generation of alkaline impurities in the material surface. It can be understood that the surface of the above high-nickel positive electrode material 100 refers to a thickness of 5 nm~10 nm of the surface of the primary particle 122.

In some embodiments, the coating layer includes the first coating layer and the second coating layer, wherein the first coating layer includes a compound containing at least one of Al, Ti, P, Si, Nb, Y, W, Cr, Zr, and La.

In some embodiments, the coating layer includes the first coating layer and the second coating layer, the first coating layer includes a compound containing at least one of Al, Ti, P, Si, Nb, Y, W, Cr, Zr, and La, and the compound is at least one of oxide, hydroxide, or salt.

In some embodiments, the second coating layer 144 includes a compound containing at least one of B, La, and Al.

In some embodiments, the second coating layer 144 includes a compound containing at least one of B, La, and Al, and this compound is at least one of oxide, acid, and lithium-containing salt.

In some embodiments, the second coating layer 144 includes a boron-containing compound, and the boron-containing compound includes at least one of boron-containing oxide, boron-containing acid, and salt containing boron and lithium.

Optionally, the boron-containing oxide includes, but is not limited to, $B_2O_3$, $B_2O$, and the like.

Optionally, the boron-containing acid includes, but is not limited to, $H_3BO_3$.

Optionally, the salt containing boron and lithium includes, but is not limited to, $Li_iB_jO_k$, where $2\leq i\leq3$, $1\leq j\leq8$, and $3\leq k\leq13$. Optionally, the salt containing boron and lithium includes, but is not limited to, at least one of $B_2O_3$, $H_3BO_3$, $Li_2O$-$B_2O_3$, $Li_3BO_3$, $Li_2B_4O_7$, $Li_2B_2O_7$, and $Li_2B_8O_{13}$.

In some embodiments, the second coating layer 144 includes an aluminum-containing compound, and the aluminum-containing compound includes aluminum containing oxide, or salt containing boron and lithium. Optionally, the aluminum-containing oxide includes, but is not limited to, $Al_2O_3$. Optionally, the salt containing boron and lithium includes, but is not limited to, $Li_3BO_3$.

In some embodiments, the second coating layer 144 includes a boron-containing compound, and the boron-containing compound includes at least one of $B_2O_3$, $H_3BO_3$, $Li_2O$-$B_2O_3$, $Li_3BO_3$, $Li_2B_4O_7$, $Li_2B_2O_7$, and $Li_2B_8O_{13}$. The

above boron-containing compound can have chemical reaction with alkaline impurities in the surface of the high-nickel positive electrode material 100, to avoid decomposition of $Li_2CO_3$ in the alkaline impurities in the material surface or gas generation caused by side reaction of the alkaline impurities with the electrolytic solution. Moreover, the boron-containing compound covers the surface of the high-nickel positive electrode material 100 to form a stable coating layer, which can improve the stability of the high-nickel positive electrode material 100.

In some embodiments, M1 includes Mn and/or Al. In some embodiments, M1 can be Mn, Al, or a mixture of Mn and Al.

In some embodiments, M2 includes an element with a valence greater than or equal to positive tetravalence in the high-nickel positive electrode material.

In some embodiments, M3 includes an element with a valence equal to positive bivalence in the high-nickel positive electrode material.

In some embodiments, M2 and M3 each include at least one of Zr, Ti, Nb, Ce, Hf, W, Mo, Ta, Ge, Sn, Sr, Mg, and Ba, and M2 and M3 are different.

In some embodiments, M4 includes an element with a valence greater than or equal to positive trivalence in the high-nickel positive electrode material.

In some embodiments, M4 includes at least one of Al, Ti, P, Si, Nb, Y, W, Cr, Zr, and La.

In some embodiments, M5 includes at least one of B, La, and A.

In some embodiments, M5 includes B.

**(3) Features and characteristics of the positive electrode material**

In some embodiments, the high-nickel positive electrode material 100 is subjected to powder XPS measurement using AlK$\alpha$ rays: after peak separation and fitting are performed on Ni2P$_{3/2}$ peak appearing when a binding energy is in a range of 850 eV~870 eV, and a standard deviation of the fitting is $\sum x^2 < 10\%$, a peak area ratio of $Ni^{2+}/Ni^{3+}$ is greater than 1. Optionally, the peak area ratio of $Ni^{2+}/Ni^{3+}$ may be 2, 3, 4, 5, and so on, indicating that a relatively large amount of $Ni^{2+}$ in the surface layer of the high-nickel material in the present disclosure can avoid oxidation of the surface of the high-nickel positive electrode material 100 during lithium deintercalation, and is beneficial to maintaining the structural stability of the positive electrode material 100.

In some embodiments, the high-nickel positive electrode material 100 is subjected to powder XPS measurement using AlK$\alpha$ rays, when peak separation and fitting are performed on O1S peak appearing when a binding energy is in a range of 526 eV~540 eV, and a standard deviation of the fitting is $\sum x^2 < 10\%$, an area ratio of $O1S_{lattice\ oxygen}/O1S_{impurity\ oxygen}$ is greater than 1/2. The impurity oxygen refers to oxygen in compounds such as LiOH, $Li_2CO_3$ and $Li_2SO_4$. Optionally, the area ratio of $O1S_{lattice\ oxygen}/O1S_{impurity\ oxygen}$ may be 0.532, 0.525, 0.573, 0.58, 0.59, and so on, and by controlling the area ratio of $O1S_{lattice\ oxygen}/O1S_{impurity\ oxygen}$ within the above range, it is beneficial to reducing alkaline impurities ($Li_2CO_3$ and LiOH, etc.) in the surface of the high-nickel positive electrode material 100, and reducing gas generating amount of the battery prepared by the high-nickel positive electrode material 100.

In some embodiments, the alkaline impurities in the surface of the high-nickel positive electrode material 100 mainly refer to $Li_2CO_3$ and LiOH, and a mass content of $Li_2CO_3$ in the high-nickel positive electrode material 100 is less than 0.3 wt%. For example, a mass content of $Li_2CO_3$ in the high-nickel positive electrode material 100 may be 0.05 wt%, 0.1 wt%, 0.12 wt%, 0.2 wt%, and so on, and certainly may also be other values within the above range, which is not limited herein. In some typical embodiments, the mass content of $Li_2CO_3$ in the high-nickel positive electrode material 100 is less than 0.13 wt%.

In some embodiments, the mass content of LiOH in the high-nickel positive electrode material 100 is less than 0.3 wt%. For example, the mass content of LiOH in the high-nickel positive electrode material 100 may be 0.05 wt%, 0.08 wt%, 0.1 wt%, 0.2 wt%, and so on, and certainly may also be other values within the above range, which is not limited herein. In some typical embodiments, the mass content of LiOH in the high-nickel positive electrode material 100 is less than 0.1 wt%.

By controlling the mass contents of $Li_2CO_3$ and LiOH in the high-nickel positive electrode material 100 within the above ranges, it is beneficial to improving processing performance of the high-nickel positive electrode material 100 and reducing gas generation of the battery prepared by the high-nickel positive electrode material 100.

In some embodiments, a crystal structure of the high-nickel positive electrode material 100 is a hexagonal crystal structure or a monoclinic crystal structure.

The hexagonal crystal structure belongs to any space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

The monoclinic crystal structure belongs to any space group selected from the group consisting of P2, P21, C2, Pm, Pc, Cm, Cc, P2/m, P21/m, C2/m, P2/c, P21/c, and C2/c.

In some typical embodiments, in order to obtain a secondary battery with a relatively high discharging capacity, the crystal structure of the high-nickel positive electrode material 100 is of the hexagonal crystal structure belonging to the space group R-3m or the monoclinic crystal structure belonging to C2/m.

In some embodiments, crystal particle morphology of the high-nickel positive electrode material 100 includes at least one of an approximate spherical shape, an approximate cubic shape, and an approximate rectangular parallelepiped shape.

In some typical embodiments, pH of the high-nickel positive electrode material 100 is: 10<pH<12. In some embodiments, the pH of the high-nickel positive electrode material 100 is: 10.5<pH<11.7. In some embodiments, the pH of the high-nickel positive electrode material 100 may be, for example, 11.1<pH<11.9, 10.5<pH<11.0 or 11.0<pH<11.7, such as 10.6, 10.8, 11.0, 11.2, 11.3, and 11.5, and certainly also may be other values within the above range, which is not limited herein. By controlling the pH of the high-nickel positive electrode material 100 within the above range, it is beneficial to further improving the processing performance of the high-nickel positive electrode material 100, for example, improving the stability of the positive electrode material in a process of preparing a battery, and being not prone to settling or powdering when being mixed with a binder. In some typical embodiments, the pH of the high-nickel positive electrode material 100 is: 11.0<pH<11.5. In some further typical embodiments, the pH of the high-nickel positive electrode material 100 is: 11.2<pH<11.3.

In some embodiments, the high-nickel positive electrode material 100 has a powder conductivity greater than 0.02 S/cm. In some embodiments, the powder conductivity of the high-nickel positive electrode material 100 may specifically be, for example, 0.03 S/cm-0.08 S/cm, 0.05 S/cm-0.08 S/cm, or 0.03 S/cm-0.05 S/cm, such as 0.03 S/cm, 0.04 S/cm, 0.05 S/cm, 0.06 S/cm, and 0.07 S/cm, and certainly may also be other values within the above ranges, which is not limited herein.

In some embodiments, a specific surface area of the high-nickel positive electrode material 100 is $0.3 \, m^2/g$~$0.8 \, m^2/g$. In some embodiments, the specific surface area of the high-nickel positive electrode material 100 may specifically be, for example, $0.3 \, m^2/g$~$0.5 \, m^2/g$, $0.5 \, m^2/g$~$0.8 \, m^2/g$ or $0.4 \, m^2/g$~$0.7 \, m^2/g$, such as $0.3 \, m^2/g$, $0.4 \, m^2/g$, $0.5 \, m^2/g$, $0.6 \, m^2/g$, $0.7 \, m^2/g$, and $0.8 \, m^2/g$, and certainly may also be other values within the above ranges, which is not limited herein. With the specific surface area of the positive electrode material 100 in the present disclosure within the above ranges, the stability and electrochemical performance of the material can be further improved, the problems such as powdering or gas generation in the preparation process due to a too large specific surface area are avoided, and meanwhile the problems such as battery capacity and rate degradation due to a too small specific surface area can be avoided.

In some embodiments, the high-nickel positive electrode material 100 has a median particle size of 2.5 $\mu$m~4.5 $\mu$m. In some embodiments, the median particle size of the high-nickel positive electrode material 100 may be, for example, 3.0 $\mu$m~4.5 $\mu$m, 2.5 $\mu$m~4.0 $\mu$m or 3.0 $\mu$m~4.0 $\mu$m, such as 2.5 $\mu$m, 3 $\mu$m, 3.5 $\mu$m, 4 $\mu$m, and 4.5 $\mu$m, and by controlling the average particle size of the high-nickel positive electrode material 100 within the above ranges, it is beneficial to improving compaction density, electric conductivity of powder, and cycling life of the high-nickel positive electrode material 100 as a positive electrode sheet.

## II. Preparation of the positive electrode material

An embodiment of the present disclosure further provides a preparation method for a high-nickel positive electrode material, including the following steps:

step S100, mixing a metal composite hydroxide precursor, a lithium-containing compound, and a dopant, and then performing a primary heat treatment to obtain a matrix material, wherein the above dopant includes an element M2 and an element M3, a compound corresponding to the element M2 is at least one of an oxide, a hydroxide, and a lithium metal oxide only containing M2, a valence of M2 in this compound is greater than or equal to positive tetravalence, a compound corresponding to the element M3 is at least one of an oxide and a hydroxide only containing M3, and a valence of M3 in the compound is positive bivalence; and

step S200, coating the matrix material obtained in step S100 to obtain the high-nickel positive electrode material.

In the above technical solution, in the dopant containing the element M2 and the element M3 in the present disclosure, M2 has relatively poor element migration capability, M3 has relatively strong ion migration capability. In the present disclosure, after the dopant containing the element M2 and the element M3 undergoes the primary heat treatment with the metal composite hydroxide precursor and the lithium-containing compound, the element M2 is doped in a surface of the material, the element M2 is mainly enriched at a grain boundary of the material, and the element M3 is doped inside the crystal of the material. Since the element M2 with a valence equal to or greater than positive tetravalence exists in the surface of the material, the amount of $Ni^{3+}$ in the material surface is reduced by valence balance. Meanwhile, the amount of $Ni^{2+}$ in the surface is increased, so that oxidization of the surface of the positive electrode material is avoided during lithium deintercalation, which is beneficial to maintaining structural stability of the positive electrode material; as the element M3 with a valence equal to positive bivalence enters the interior of the material, phase transition of H2 → H3 during charging and discharging of the material can be inhibited, thus improving the structural stability, and at the same time, M3 can replace positions of a part of Li$^+$ in internal lattices of the material, without affecting the layered structure of the material. In the present disclosure, the stability of the high-nickel positive electrode material can be improved by forming the matrix material by doping the element M2 and the element M3, and the capacity performance of the high-nickel positive electrode material is further improved. The preparation method of the present disclosure is specifically introduced below with reference to embodiments and examples.

Prior to step S100, the metal composite hydroxide precursor is prepared, including: obtaining the metal composite hydroxide precursor by performing a mixing treatment on a metal salt solution, a complexing agent, and a pH regulator by a coprecipitation method.

In some embodiments, a mass ratio of the metal salt solution, the complexing agent, and the pH regulator is 1:(0.01~0.10):(0.1~0.8). In some embodiments, the mass ratio of the metal salt solution, the complexing agent, and the pH regulator may specifically be, for example, 1-(0.05-0.10)-(0.1-0.8), 1:(0.01~0.10):(0.4~0.8), 1:(0.05~0.10):(0.1~0.5), such as 1:0.01:0.1, 1:0.05:0.3, 1:0.1:1.5, and 1:0.08:0.8. With the mass ratio of the metal salt solution, the complexing agent, and the pH regulator in the present disclosure within the above ranges, it can promote orderly growth of the primary particle (namely, radial growth of crystal), which facilitates limiting the size of the material particles within a certain range, facilitates improving tap density and particle size distribution of the material, and ensures no crack of the particles.

In some embodiments, the metal salt solution includes at least one of a nickel salt solution, a cobalt salt solution, a manganese salt solution, and an aluminum salt solution.

In some embodiments, the nickel salt solution includes at least one of nickel sulfate, nickel chloride, nickel aminosulfonate, nickel bromide, nickel hydroxide, and nickel carbonyl.

In some embodiments, the cobalt salt solution includes at least one of cobalt sulfate, cobalt chloride, and cobalt nitrate.

In some embodiments, the manganese salt solution includes at least one of manganese sulfate, manganese nitrate, and manganese chloride.

In some embodiments, the aluminum salt solution includes at least one of sodium meta-aluminate, aluminum sulfate, aluminum chloride, and potassium meta-aluminate.

In some embodiments, the complexing agent should be selected to be capable of forming a complex with ions of nickel, cobalt, manganese, or aluminum in an aqueous solution. In some embodiments, the complexing agent includes at least one of ammonium ion donor, hydrazine, ethylenediamine tetraacetic acid, nitrilotriacetic acid, uracil diacetic acid, and glycine, and the ammonium ion donor includes at least one of ammonia, ammonium sulfate, ammonium chloride, ammonium carbonate, and ammonium fluoride.

In some embodiments, a temperature of the mixing treatment is 10 °C~80 °C. In some embodiments, the temperature of the mixing treatment is, for example, 10 °C~50 °C, 40 °C~80 °C or 20 °C~60 °C, such as 10 °C, 20 °C, 30 °C, 40 °C, 50 °C, 60 °C, 70 °C, and 80 °C, and certainly may also be other values within the above ranges, which is not limited herein. In some typical embodiments, the temperature of the mixing treatment is 20 °C~70 °C. By controlling the temperature of reaction of the coprecipitation method within the above ranges, it is beneficial to the growth of precursor grains.

In some embodiments, the pH regulator includes an alkali metal hydroxide.

In some embodiments, the alkali metal oxide includes at least one of sodium hydroxide and potassium hydroxide.

In some embodiments, pH of the mixing treatment is 9~13. In some embodiments, the pH of the mixing treatment is, for example, 9-12, 10-13 or 10-12, such as 9, 10, 11, 12, and 13, and certainly may also be other values within the above ranges, which is not limited herein. In some typical embodiments, the pH of the mixing treatment is 11-13.

In some embodiments, time of the mixing treatment is 10 h~200 h. In some embodiments, the specific time of the mixing treatment may be, for example, 50 h~200 h, 10 h~150 h or 50 h~150 h, such as 10 h, 20 h, 30 h, 40 h, 50 h, 60 h, 70 h, 80 h, 90 h, 100 h, 110 h, 120 h, 130 h, 140 h, 150 h, 160 h, 170 h, 180 h, 190 h and 200 h, and certainly may also be other values within the above ranges, which is not limited herein.

In some embodiments, the mixing treatment is performed in a stirring state at a stirring rate of 800 rpm~1200 rpm. In some embodiments, the stirring rate may specifically be, for example, 1000 rpm~1200 rpm, 800 rpm~1000 rpm, or 900 rpm~1100 rpm, such as 800 rpm, 900 rpm, 1000 rpm, 1100 rpm, and 1200 rpm, and certainly may also be other values within the above ranges, which is not limited herein.

In some embodiments, the mixing treatment is performed in a reaction tank, wherein the reaction tank is of at least one of a continuous type in which the metal composite hydroxide formed is separated to overflow and an intermittent type in which the metal composite hydroxide formed is not discharged to the outside of the system until the reaction is ended.

In some embodiments, the metal composite hydroxide precursor prepared through the mixing treatment is a slurry-like suspension, which is subjected to solid-liquid separation, washing, and drying to obtain the metal composite hydroxide precursor.

In some embodiments, a mode of the solid-liquid separation includes any one of centrifugation and filtration, and the solid-liquid separation aims at separating the metal composite hydroxide from a solvent.

In some embodiments, deionized water is employed in the washing for multiple washes to remove impurities.

In some embodiments, a temperature of the drying is 100 °C~130 °C. In some embodiments, the temperature of the drying may be, for example, 100 °C~120 °C, 110 °C~130 °C or 110 °C~120 °C, such as 100 °C, 110 °C, 120 °C, and 130 °C, and certainly may also be other values within the above ranges, which is not be limited herein.

In some embodiments, time of the drying is 12 h~24 h. The time of the drying specifically may be, for example, 15 h~24 h, 12 h~20 h, or 15 h~20 h, such as 12 h, 13 h, 14 h, 15 h, 16 h, 17 h, 18 h, 19 h, 20 h, 21 h, 22 h, 23 h, and 24 h, and certainly may also be other values within the above ranges, which is not limited herein.

In some embodiments, an average particle size of the metal composite hydroxide precursor is 3 μm~10 μm. In some embodiments, a median particle size of the metal composite hydroxide precursor may be, for example, 5 μm~10 μm, 3 μm~8 μm or 5 μm~9 μm, such as 3 μm, 4 μm, 5 μm, 6 μm, 7 μm, 8 μm, 9 μm, and 10 μm, and certainly may also be other values within the above ranges, which is not limited herein.

In step S100, the metal composite hydroxide precursor, the lithium-containing compound, and the dopant are mixed, and then the primary heat treatment is performed to obtain the matrix material, wherein the dopant includes the compound containing the element M2 and the compound containing the element M3, the compound corresponding to the element M2 is at least one of an oxide, a hydroxide, and a lithium metal oxide only containing M2, the valence of M2 in this compound is greater than or equal to positive tetravalence, the compound corresponding to the element M3 is at least one of an oxide and a hydroxide only containing M3, and the valence of the element M3 in this compound is positive bivalence.

In the above step, the dopant is added to perform the primary heat treatment, so that the element M2 with a valence greater than or equal to positive tetravalence is mainly doped in the material surface, and the element M3 with a valence of positive bivalence mainly enters the interior of the material. It can be appreciated that after the primary heat treatment, the element M3 can directly enter the interior of the crystal to substitute sites of a part of Li, the element M2 is mainly enriched at the grain boundary of the material, and a small part of the element M2 is induced by the element M3 into the interior of the crystal, and substitutes a small amount of element sites inside the crystal.

In some embodiments, a mass ratio of the metal composite hydroxide precursor, the lithium-containing compound, and the dopant is 1:(0.46-0.49):(0.001-0.005). In some embodiments, the mass ratio of the metal composite hydroxide precursor, the lithium-containing compound, and the dopant may be, for example, 1:(0.46-0.48):(0.001-0.003), 1:(0.46-0.47):(0.001-0.002), or 1:(0.45~0.47):(0.002~0.003), such as 1:0.46:0.002, 1:0.47:0.003, 1:0.48:0.001, 1:0.47:0.002, and 1:0.48:0.001, and certainly may also be other values within the above ranges, which is not limited herein. With the mass ratio of the metal composite hydroxide precursor, the lithium-containing compound, and the dopant in the present disclosure within the above ranges, the discharging capacity and the rate capacity of the material can be further improved, so that the material maintains a relatively high capacity retention rate and a relatively low DCR growth rate; and a relatively low mass ratio of the metal composite hydroxide precursor to the lithium-containing compound will affect the discharging capacity and the rate capacity of the material, and a relatively high mass ratio of the metal composite hydroxide precursor to the lithium-containing compound will cause more residual alkalis in the material surface, reduced capacity, and increased cost.

In some embodiments, an atomic ratio of metal Me in the metal composite hydroxide precursor to Li in the lithium-containing compound is 1.0<Li/Me<1.2. In some embodiments, Li/Me may be 1.01, 1.05, 1.1, 1.15, 1.19, etc., and Me represents a sum of amounts of atoms of all metals in the metal composite hydroxide precursor, and by controlling the atomic ratio of the metal Me in the metal composite hydroxide precursor to Li in the lithium-containing compound within the above range, it is beneficial to formation of grains of the matrix material and improvement on electrochemical performance of the material.

In some embodiments, the lithium-containing compound includes a lithium-containing salt and a lithium-containing hydroxide. In some embodiments, the lithium-containing compound includes at least one of lithium carbonate, lithium hydroxide, lithium nitrate, and lithium acetate.

In some embodiments, the elements M2 and M3 each include at least one of Zr, Ti, Nb, Ce, Hf, W, Mo, Ta, Ge, Sn, Sr, Mg, and Ba, and M2 and M3 are different. In some embodiments, the dopant includes at least one of lithium zirconate, lithium titanate, niobium oxide, lithium tungstate, barium oxide, and magnesium hydroxide.

In some embodiments, a molar ratio $n_{M2}:n_{M3}$ of the element M2 to the element M3 is greater than or equal to 2:1. In some embodiments, $n_{M2}:n_{M3}$ may be, for example, (2-6):1, (2-5):1 or (3-5):1, such as 2:1, 3:1, 4:1, 5:1, and 6:1. Within the above limitation ranges, a high-valence element (the element M2 with a valence equal to or greater than positive tetravalence) can be effectively doped in the surface layer of the material, while a low-valence element (the element M3 with a valence of positive bivalence) can enter the interior of the material with only a small amount added, and adding too many low-valence elements may inhibit the electrochemical performance of the material. In some embodiments, the molar ratio of the element M2 to the element M3 in the dopant is $3:1 \leq n_{M2}:n_{M3} \leq 5:1$.

In some embodiments, an average particle size of the dopant is 10 nm~50 nm. In some embodiments, the average particle size of the dopant may specifically be, for example, 10 nm~40 nm, 20 nm~50 nm, or 20 nm~40 nm, such as 10 nm, 20 nm, 30 nm, 40 nm, and 50 nm, and certainly may also be other values within the above ranges, which is not limited herein.

In some embodiments, a temperature of the primary heat treatment is 680 °C~900 °C. In some embodiments, the temperature of the primary heat treatment is, for example, 700 °C~900 °C, 680 °C~800 °C or 700 °C~800 °C, such as 680 °C, 700 °C, 720 °C, 750 °C, 780 °C, 800 °C, 820 °C, 850 °C, and 900 °C, and certainly may also be other values within the above ranges, which is not limited herein. In some typical embodiments, the temperature of the primary heat treatment is 780 °C~870 °C. By controlling the temperature of the primary heat treatment within the above ranges, it is beneficial to grain growth of the high-nickel positive electrode material.

In some embodiments, time of the primary heat treatment is 5 h~20 h. In some embodiments, the time of the primary heat treatment is, for example, 5 h~15 h, 10 h~20 h or 10 h~18 h, such as 5 h, 6 h, 7 h, 8 h, 9 h, 10 h, 11 h, 12 h, 13 h, 14 h, 15 h, 16 h, 17 h, 18 h, 19 h, and 20 h, and certainly may also be other values within the above ranges, which is not limited herein. In some typical embodiments, the time of the primary heat treatment is 8 h~15 h.

In some embodiments, a heating rate of the primary heat treatment is 50 °C/h~550 °C/h. In some embodiments, the heating rate of the primary heat treatment is, for example, 100 °C/h~550 °C/h, 150 °C/h~500 °C/h, or 200 °C/h~300 °C/h, such as 50 °C/h, 100 °C/h, 140 °C/h, 200 °C/h, 250 °C/h, 300 °C/h, 380 °C/h, 400 °C/h, 450 °C/h, 500 °C/h, and 550 °C/h, and certainly may also be other values within the above ranges, which is not limited herein. In some typical embodiments, the heating rate of the primary heat treatment is 100 °C/h~400 °C/h. In some further typical embodiments, the heating rate of the primary heat treatment is 140 °C/h~380 °C/h.

In some embodiments, an oxygen content of the matrix material is greater than or equal to 85%. In some embodiments, the oxygen content of the matrix material may be, for example, 85%-98%, 85%~95% or 89%-97%, such as 85%, 86%, 87%, 88%, 89%, 90%, 91%, 92%, 93%, 94%, 95%, 96%, and 97%, and certainly may also be other values within the above ranges, which is not limited herein. In some typical embodiments, the oxygen content of the matrix material is greater than or equal to 95%.

In some embodiments, devices for the primary heat treatment include a stationary box furnace or a roller kiln continuous furnace.

In step S200, the matrix material obtained in step S100 is coated to obtain the high-nickel positive electrode material.

Step 201, mixing the matrix material and a first coating agent, and then performing a secondary heat treatment to obtain a primary coating resultant.

In some embodiments, a mass ratio of the matrix material to the first coating agent is 1000:(0.5~3). In some embodiments, the mass ratio of the matrix material to the first coating agent may specifically be, for example, 1000-(1-3), 1000:(1.5~3) or 1000:(2.5~3), such as 1000:0.5, 1000:1, 1000:1.5, 1000:2, 1000:2.5, and 1000:3, and certainly may also be other values within the above range, which is not limited herein.

In some embodiments, the first coating agent includes a metal element or a non-metal element with a valence greater than or equal to positive trivalence. In the present disclosure, by adding the metal element or the non-metal element with a valence greater than or equal to positive trivalence, the amount of $Ni^{2+}$ in the surface of the high-nickel positive electrode material is unchanged or further increased by valence balance, thus improving the structural stability of the material, avoiding contact of the material with moisture in the air to generate alkaline impurities, and reducing the gas generation of the material.

In some embodiments, the first coating agent includes at least one of an oxide, a salt, or a hydroxide of the metal element or the non-metal element with a valence greater than or equal to positive trivalence.

In some embodiments, the metal element or the non-metal element includes at least one of Al, Ti, P, Si, Nb, Y, W, Cr, Zr, or La.

In some embodiments, the first coating agent may be at least one of lithium aluminate, lithium titanate, lithium lanthanum titanate, yttrium oxide, aluminum oxide, and titanium oxide.

In some embodiments, a temperature of the secondary heat treatment is 600 °C~800 °C. In some embodiments, the temperature of the secondary heat treatment is, for example, 650 °C~800 °C, 600 °C~750 °C, or 700 °C~800 °C, such as 600 °C, 650 °C, 680 °C, 700 °C, 720 °C, 750 °C, 780 °C, and 800°C, and certainly may also be other values within the above ranges, which is not limited herein. In some typical embodiments, the temperature of the secondary heat treatment is 650 °C~750 °C.

In some embodiments, time of the secondary heat treatment is 1 h~20 h. In some embodiments, the time of the secondary heat treatment may be, for example, 5 h~20 h, 10 h~20 h or 5 h~10 h, such as 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, and 20 h, and certainly may also be other values within the above ranges, which is not limited herein. In some typical embodiments, the time of the secondary heat treatment is 3 h~10 h.

In some embodiments, a heating rate of the secondary heat treatment is 50 °C/h~550 °C/h. In some embodiments, the heating rate of the secondary heat treatment is, for example, 100 °C/h~550 °C/h, 50 °C/h~500 °C/h or 150 °C/h~450 °C/h, such as 50 °C/h, 100 °C/h, 140 °C/h, 200 °C/h, 250 °C/h, 300 °C/h, 380 °C/h, 400 °C/h, 450 °C/h, 500 °C/h, and 550 °C/h, and certainly may also be other values within the above ranges, which is not limited herein. In some typical embodiments, the heating rate of the secondary heat treatment is 100 °C/h~400 °C/h. In some further typical embodiments, the heating rate of the secondary heat treatment is 140 °C/h~380 °C/h.

In some embodiments, an oxygen content of the primary coating resultant is greater than or equal to 85%. In some embodiments, the oxygen content of the primary coating resultant may be, for example, 85%-95%, 90%~97% or 89%-97%, such as 85%, 86%, 87%, 88%, 89%, 90%, 91%, 92%, 93%, 94%, 95%, 96%, and 97%, and certainly may also be other values within the above ranges, which is not limited herein. In some typical embodiments, the oxygen content of the primary coating resultant is greater than or equal to 95%.

In some embodiments, devices for the secondary heat treatment include a stationary box furnace or a roller kiln continuous furnace.

In some embodiments, the matrix material and the first coating agent are mixed, then the mixture undergoes the secondary heat treatment, and then is washed under a constant-temperature condition, after the washing, the resultant undergoes a drying treatment under a vacuum condition, to obtain the primary coating resultant.

In some embodiments, a temperature of the constant-temperature condition is 10 °C~25 °C. In some embodiments, a temperature of the constant-temperature condition may be, for example, 15 °C~25 °C, 10 °C~20 °C or 15 °C~20 °C, such as 10 °C, 11 °C, 12 °C, 13 °C, 14 °C, 15 °C, 16 °C, 17 °C, 18 °C, 19 °C, 20 °C, 21 °C, 22 °C, 23 °C, 24 °C, and 25 °C, and certainly may also be other values within the above ranges, which is not limited herein.

In some embodiments, a temperature of the drying is 100 °C~200 °C. In some embodiments, the temperature of the drying may specifically be 120 °C~200 °C, 150 °C~200 °C or 100 °C~150 °C, such as 100 °C, 110 °C, 120 °C, 130 °C, 140 °C, 150 °C, 160 °C, 170 °C, 180 °C, 190 °C, and 200 °C, and certainly may also be other values within the above ranges, which is not limited herein.

Step S202, mixing the primary coating resultant and the second coating agent, and then performing a tertiary heat treatment to obtain the high-nickel positive electrode material.

In some embodiments, the second coating layer 144 includes a compound containing at least one of B, La, and Al.

In some embodiments, the second coating layer 144 includes a compound containing at least one of B, La, and Al, and the compound is an oxide, an acid, or a lithium-containing salt.

In some embodiments, the second coating layer 144 includes a boron-containing compound, and the boron-containing compound includes a boron-containing oxide, a boron-containing acid, or a salt containing boron and lithium.

In some embodiments, the second coating layer 144 includes a boron-containing compound, and the boron-containing compound includes a boron-containing oxide, a boron-containing acid, and a salt containing boron and lithium.

Optionally, the boron-containing oxide includes, but is not limited to, $B_2O_3$, $B_2O$ or the like.

Optionally, the boron-containing acid includes, but is not limited to, $H_3BO_3$.

Optionally, the salt containing boron and lithium includes, but is not limited to, $Li_iB_jO_k$, where $2 \leq i \leq 3$, $1 \leq j \leq 8$, and $3 \leq k \leq 13$. Optionally, the salt containing boron and lithium includes, but is not limited to, at least one of $B_2O_3$, $H_3BO_3$, $Li_2O$-$B_2O_3$, $Li_3BO_3$, $Li_2B_4O_7$, $Li_2B_2O_7$, and $U_2B_8O_{13}$.

In some embodiments, the second coating agent is a boron-containing compound, and the boron-containing compound includes at least one of $B_2O_3$, $H_3BO_3$, $Li_2O$-$B_2O_3$, $Li_3BO_3$, $Li_2B_4O_7$, $Li_2B_2O_7$, and $Li_2B_8O_{13}$. By adding the boron-containing compound to the primary coating resultant, the above boron-containing compound not only can react with the alkaline impurities in the material surface, but also can cover the material surface to form a stable coating layer, which not only reduces the alkaline impurities in the material surface, but also protects the material surface, reduces decomposition and gas generation of $Li_2CO_3$ in the alkaline impurities in the material surface, and reduces the occurrence of side reaction of the alkaline impurities in the material surface with the electrolytic solution to generate gas.

In some embodiments, a mass ratio of the primary coating resultant to the second coating agent is 1:(0.0005-0.005). In some embodiments, a mass ratio of the primary coating resultant to the second coating agent may be, for example, 1:(0.0008-0.003), 1:(0.001-0.0025) or 1:(0.0015-0.002), such as 1:0.0005, 1:0.0007, 1:0.0009, 1:0.001, 1:0.0015, 1:0.002, 1:0.0025, and 1:0.003, and certainly may also be other values within the above range, which is not limited herein.

In some embodiments, a temperature of the tertiary heat treatment is 200 °C~400 °C. In some embodiments, the temperature of the tertiary heat treatment is, for example, 200 °C~300 °C, 300 °C~400 °C or 250 °C~350 °C, such as 200 °C, 250 °C, 280 °C, 300 °C, 320 °C, 360 °C, 380 °C, and 400 °C, and certainly may also be other values within the above ranges, which is not limited herein. In some typical embodiments, the temperature of the tertiary heat treatment is 250 °C~360 °C.

In some embodiments, time of the tertiary heat treatment is 1 h~20 h. In some embodiments, the time of the tertiary heat treatment is, for example, 5 h~20 h , 1 h~15 h or 4 h~16 h, such as 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, and 20 h, and certainly may also be other values within the above ranges, which is not limited herein. In some typical embodiments, the time of the tertiary heat treatment is 5 h~10 h.

In some embodiments, a heating rate of the tertiary heat treatment is 50 °C/h~550 °C/h. In some embodiments, the heating rate of the tertiary heat treatment is, for example, 200 °C/h~550 °C/h, 50 °C/h~350 °C/h or 200 °C/h~300 °C/h, such as 50 °C/h, 100 °C/h, 140 °C/h, 200 °C/h, 250 °C/h, 300 °C/h, 380 °C/h, 400 °C/h, 450 °C/h, 500 °C/h, and 550 °C/h, and certainly may also be other values within the above ranges, which is not limited herein. In typical embodiments, the heating rate of the tertiary heat treatment is 100 °C/h~400 °C/h. In some further typical embodiments, the heating rate of the tertiary heat treatment is 140 °C/h~380 °C/h.

In some embodiments, an oxygen content of the high-nickel positive electrode material is greater than or equal to 85%, and in some embodiments, the oxygen content of the high-nickel positive electrode material may be, for example, 85%-98%, 85%~95% or 89%-97%, such as 85%, 86%, 87%, 88%, 89%, 90%, 91%, 92%, 93%, 94%, 95%, 96%, and 97%, and certainly may also be other values within the above ranges, which is not limited herein. In some typical embodiments, the oxygen content of the high-nickel positive electrode material is greater than or equal to 95%.

In some embodiments, devices for the tertiary heat treatment include a stationary box furnace or a roller kiln continuous furnace.

In some embodiments, the tertiary heat treatment further includes steps of sieving and demagnetizing.

In some embodiments, the sieving is targeted to 200 mesh~400 mesh. In some embodiments, mesh number of the sieving may be, for example, 300 mesh~400 mesh, 200 mesh~300 mesh, or 240 mesh~360 mesh, such as 200 mesh, 210 mesh, 250 mesh, 280 mesh, 300 mesh, 350 mesh, 380 mesh, and 400 mesh, and certainly may also be other values within the above ranges, which is not limited herein.

### III. Battery

An embodiment of the present disclosure further provides a lithium-ion secondary battery, including a positive electrode sheet, a negative electrode sheet, a separator, a non-aqueous electrolytic solution, and a casing. In some embodiments, the positive electrode sheet includes a current collector and the high-nickel positive electrode material as the above coated on the current collector or a positive electrode material prepared by the above preparation method for a high-nickel positive electrode material.

Compared with the prior art, the present disclosure has the following beneficial effects: the high-nickel positive electrode material in the present disclosure is subjected to powder XPS measurement using AlK$\alpha$ rays, and after peak separation and fitting are performed on Ni2P$_{3/2}$ peak appearing when a binding energy is in a range of 850 eV~870 eV, a peak area S1 of Ni$^{2+}$, a peak area S2 of Ni$^{3+}$, a peak width at half height $\alpha$ of Ni$^{2+}$, and a peak width at half height $\beta$ of Ni$^{3+}$ satisfy: S1/(S1+S2)>0.5 and 0.9<$\alpha/\beta$<1.5, indicating that there is a relatively small amount of Ni$^{3+}$ and a relatively large amount of Ni$^{2+}$ in a surface of the high-nickel positive electrode material in the present disclosure, which can also avoid oxidation of the surface of the high-nickel positive electrode material during lithium deintercalation, and facilitate maintaining structural stability of the positive electrode material, thereby avoiding loss of the positive electrode active material and the electrolytic solution during charging and discharging, and further improving the capacity of the positive electrode material, so that the high-temperature cycle performance of the high-nickel positive electrode material is obviously improved. In addition, since the amount of Ni$^{3+}$ is relatively small and the amount of Ni$^{2+}$ is relatively large in the material surface, internal cracks of the material during charging and discharging can be reduced, so that an internal structure of the material is stable, then when the positive electrode material in the present disclosure is applied to the battery for long-term cycle, the DC internal resistance increase of the battery is obviously inhibited.

In the present disclosure, after the dopant containing the element M2 with a valence greater than or equal to the positive tetravalence and the element M3 with a valence equal to the positive bivalence undergoes the primary heat treatment, the element M2 is doped in the surface of the material, and the element M3 is doped in the interior of the material. Since the element M2 with a valence greater than or equal to the positive tetravalence exists in the surface of the material, by valence balance, the amount of Ni$^{3+}$ in the material surface is reduced. Meanwhile, the amount of Ni$^{2+}$ in the surface is increased, so that oxidization of the surface of the positive electrode material is avoided during lithium deintercalation, which is beneficial to maintaining the structural stability of the positive electrode material. As the element M3 with a valence equal to positive bivalence enters the interior of the material, phase transition of H2→H3 during charging and discharging of the material can be inhibited, thus improving the structural stability. At the same time, M3 can replace positions of a part of Li$^+$ in internal lattices of the material, without affecting the layered structure of the material. In the present disclosure, the stability of the high-nickel positive electrode material can be improved by forming the matrix material by doping the element M2 and the element M3, and the capacity performance of the high-nickel positive electrode material is further improved.

The embodiments of the present disclosure are described, and the present disclosure is not limited thereto as long as it does not depart from the gist thereof.

**Example**

Example 1

(1) An $Ni_{0.885}Co_{0.09}Mn_{0.025}(OH)_2$ precursor was prepared by a coprecipitation method, and the $Ni_{0.885}Co_{0.09}Mn_{0.025}(OH)_2$ precursor, $LiOH \cdot H_2O$, and a dopant nano $TiO_2$, $ZrO_2$, and MgO were mixed uniformly, wherein $(n_{TiO2}+n_{ZrO2}):n_{MgO}$=3:1, and then the mixture underwent a primary heat treatment at 830 °C to obtain a matrix material, wherein Li/Me=1.05, and Me=(Ni, Co, and Mn) (where M represents "a metal in a metal composite hydroxide precursor").

(2) The matrix material prepared in step (1) and nano $Al_2O_3$ were mixed uniformly in a mass ratio of 1:0.002, then the mixture underwent a secondary heat treatment at 700 °C, a material obtained from the secondary heat treatment was fed to distilled water and washed with water while maintaining a temperature of 25 °C, and after a dehydration procedure, the mixture was dried in a vacuum atmosphere at 150 °C to obtain a primary coating resultant.

(3) The primary coating resultant and $H_3BO_3$ (i.e., a second coating agent) were mixed uniformly in a mass ratio of 1:0.001, and the mixture underwent a tertiary heat treatment at 300 °C, and then underwent sieving and demagnetizing to obtain the high-nickel positive electrode material.

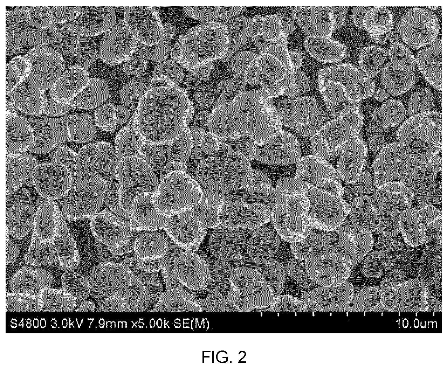

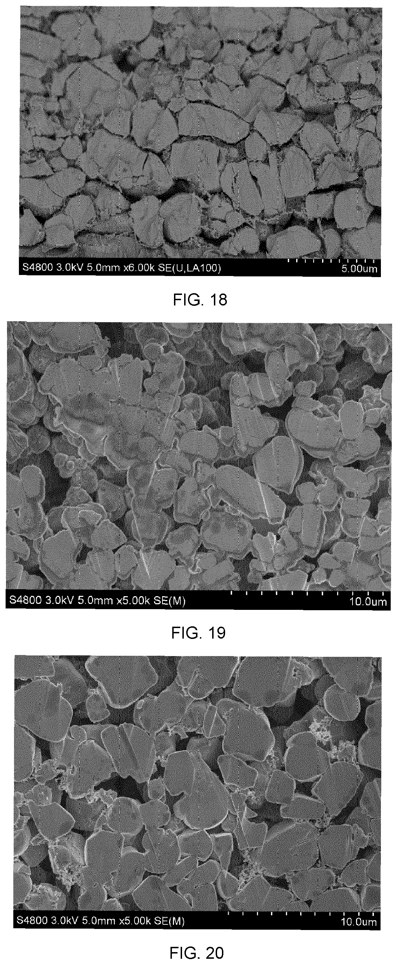

A structural schematic diagram of the positive electrode material 100 in the present example is as shown in FIG. 19, a first coating layer 142 is formed on a surface of a primary particle 122 (the primary particle 122 is just the matrix material prepared in step (1), then the primary coating resultant prepared in step (2) is obtained), and a second coating layer 144 is formed on a surface of the first coating layer 142. The overall distribution of the positive electrode material 100 presents a monocrystalline particle structure, i.e., the primary particle 122 (i.e., prepared in step (3)). As shown in FIG. 2, it is an SEM diagram of the high-nickel positive electrode material in the present example, wherein morphology of crystal particles includes an approximate spherical shape, an approximate cubic shape, and an approximate rectangular parallelepiped shape.

Example 2

Different from Example 1, $(n_{TiO2}+n_{ZrO2})$-$n_{MgO}$=1:1 in step (1).
The high-nickel positive electrode material in the present example has a structure similar to that in Example 1, and the overall distribution of the positive electrode material presents a monocrystalline particle structure, i.e., the primary particle.

Example 3

Different from Example 1, $(n_{TiO2}+n_{zrO2}):n_{MgO}$=2:1 in step (1).
The high-nickel positive electrode material in the present example has a structure similar to that in Example 1, and the overall distribution of the positive electrode material presents a monocrystalline particle structure, i.e., the primary particle.

Example 4

Different from Example 1, $(n_{TiO2}+n_{ZrO2}):n_{MgO}$=4:1 in step (1).
The high-nickel positive electrode material in the present example has a structure similar to that in Example 1, and the overall distribution of the positive electrode material presents a monocrystalline particle structure, i.e., the primary particle.

Example 5

Different from Example 1, $(n_{TiO2}+n_{ZrO2}):n_{MgO}$=5:1 in step (1).
The high-nickel positive electrode material in the present example has a structure similar to that in Example 1, and the overall distribution of the positive electrode material presents a monocrystalline particle structure, i.e., the primary particle.

Example 6

Different from Example 1, $(n_{TiO2}+n_{ZrO2}):n_{MgO}$=6:1 in step (1).

The high-nickel positive electrode material in the present example has a structure similar to that in Example 1, and the overall distribution of the positive electrode material presents a monocrystalline particle structure, i.e., the primary particle.

Example 7

Different from Example 1, $(n_{TiO2}+n_{ZrO2}):n_{MgO}$=7:1 in step (1).

The high-nickel positive electrode material in the present example has a structure similar to that in Example 1, and the overall distribution of the positive electrode material presents a monocrystalline particle structure, i.e., the primary particle.

Example 8

Different from Example 1, in step (1), the dopant was replaced with $WO_3$, ZrOz, MgO, and $(n_{WO3}+n_{ZrO2}):n_{MgO}$=3:1.

The high-nickel positive electrode material in the present example has a structure similar to that in Example 1, and the overall distribution of the positive electrode material presents a monocrystalline particle structure, i.e., the primary particle.

Example 9

Different from Example 1, in step (1), the dopant was replaced with $WO_3$, ZrOz, $Y_2O_3$, and $(n_{WO3}+n_{ZrO2}):n_{Y2O3}$=3:1.

The high-nickel positive electrode material in the present example has a structure similar to that in Example 1, and the overall distribution of the positive electrode material presents a monocrystalline particle structure, i.e., the primary particle.

Example 10

Different from Example 1, in step (1), the dopant was replaced with MoOs, $ZrO_2$, $Y_2O_3$, and $(n_{MoO3}+n_{ZrO2}):n_{Y2O3}$=3:1.

The high-nickel positive electrode material in the present example has a structure similar to that in Example 1, and the overall distribution of the positive electrode material presents a monocrystalline particle structure, i.e., the primary particle.

Example 11

Different from Example 1, in step (1), the dopant was replaced with MoOs, $ZrO_2$, $Al_2O_3$, and $(n_{MoO3}+n_{ZrO2}):n_{Al2O3}$=3:1.

The high-nickel positive electrode material in the present example has a structure similar to that in Example 1, and the overall distribution of the positive electrode material presents a monocrystalline particle structure, i.e., the primary particle.

Example 12

Different from Example 1, in step (1), the dopant was replaced with ZrOz, MgO, and $n_{ZrO2}:n_{MgO}$=3:1.

The high-nickel positive electrode material in the present example has a structure similar to that in Example 1, and the overall distribution of the positive electrode material presents a monocrystalline particle structure, i.e., the primary particle.

Example 13

Different from Example 1, the temperature of the primary heat treatment in step (1) was 650 °C.

A structural schematic diagram of the positive electrode material 100 in the present example is as shown in FIG. 20. The high-nickel positive electrode material in the present example has a structure similar to that in Example 1, and the difference lies in that a part of primary particles 122 aggregate to form the secondary particles 124, and the overall distribution of the positive electrode material presents a polycrystalline particle structure, i.e., the secondary particle.

Example 14

Different from Example 1, the temperature of the primary heat treatment in step (1) was 680 °C.
The high-nickel positive electrode material in the present example has a structure similar to that in Example 1, and the overall distribution of the positive electrode material presents a polycrystalline particle structure, i.e., the secondary particle.

Example 15

Different from Example 1, the temperature of the primary heat treatment in step (1) was 700 °C.
The high-nickel positive electrode material in the present example has a structure similar to that in Example 13, and the overall distribution of the positive electrode material presents a polycrystalline particle structure, i.e., the secondary particle.

Example 16

Different from Example 1, the temperature of the primary heat treatment in step (1) was 850 °C.
The high-nickel positive electrode material in the present example has a structure similar to that in Example 1, and the overall distribution of the positive electrode material presents a monocrystalline particle structure, i.e., the primary particle.

Example 17

Different from Example 1, the temperature of the primary heat treatment in step (1) was 900 °C.
The high-nickel positive electrode material in the present example has a structure similar to that in Example 1, and the overall distribution of the positive electrode material presents a monocrystalline particle structure, i.e., the primary particle.

Example 18

Different from Example 1, the temperature of the primary heat treatment in step (1) was 910 °C.
The high-nickel positive electrode material in the present example has a structure similar to that in Example 1, and the overall distribution of the positive electrode material presents a monocrystalline particle structure, i.e., the primary particle.

Example 19

Different from Example 1, in step (2), $Al_2O_3$ was replaced with lithium aluminate.
The high-nickel positive electrode material in the present example has a structure similar to that in Example 1, and the overall distribution of the positive electrode material presents a monocrystalline particle structure, i.e., the primary particle.

Example 20

Different from Example 1, in step (2), $Al_2O_3$ was replaced with titanium oxide.
The high-nickel positive electrode material in the present example has a structure similar to that in Example 1, and the overall distribution of the positive electrode material presents a monocrystalline particle structure, i.e., the primary particle.

Example 21

Different from Example 1, in step (3), $H_3BO_3$ was replaced with $Li_3BO_3$.
The high-nickel positive electrode material in the present example has a structure similar to that in Example 1, and the overall distribution of the positive electrode material presents a monocrystalline particle structure, i.e., the primary particle.

Example 22

Different from Example 1, in step (3), $H_3BO_3$ was replaced with $B_2O_3$.
The high-nickel positive electrode material in the present example has a structure similar to that in Example 1, and the overall distribution of the positive electrode material presents a monocrystalline particle structure, i.e., the primary particle.

Example 23

Different from Example 1, step (3) was not carried out.
Referring to FIG. 25, which is a structural schematic diagram of the high-nickel positive electrode material in the present example, only the first coating layer is formed on the surface of the primary particle, and the overall distribution of the positive electrode material presents a monocrystalline particle structure.

Example 24

Different from Example 1, step (2) was not carried out.
Referring to FIG. 26, which is a structural schematic diagram of the high-nickel positive electrode material in the present example, only the second coating layer is formed on the surface of the primary particle, and the overall distribution of the positive electrode material presents a monocrystalline particle structure.

Example 25

Different from Example 1, $Ni_{0.83}Co_{0.12}Mn_{0.06}(OH)_2$ precursor was chosen as the precursor.
The high-nickel positive electrode material in the present example has a structure similar to that in Example 1, and the overall distribution of the positive electrode material presents monocrystalline particle, i.e., the primary particle.

Example 26

Different from Example 1, $Ni_{0.9}Co_{0.05}Mn_{0.05}(OH)_2$ precursor was chosen as the precursor.
The high-nickel positive electrode material in the present example has a structure similar to that in Example 1, and the overall distribution of the positive electrode material presents monocrystalline particle, i.e., the primary particle.

Comparative Example 1

Different from Example 1, the dopant in step (1) was replaced with MgO and $Al_2O_3$.

Comparative Example 2

Different from Example 1, the dopant in step (1) was replaced with SrO and MgO.

Comparative Example 3

Different from Example 1, the dopant in step (1) was replaced with $Al_2O_3$ and $Y_2O_3$.

Comparative Example 4

Different from Example 1, the dopant in step (1) was replaced with $Y_2O_3$ and MgO.

Comparative Example 5

Different from Example 1, the dopant in step (1) was replaced with $La_2O_3$ and $Al_2O_3$.

Comparative Example 6

Different from Example 1, the dopant in step (1) was replaced with $ZrO_2$ and $TiO_2$.

**Performance Test:**

(1) Test of alkaline impurities of the high-nickel material

The content of alkaline impurities in the surface of the high-nickel material is a characteristic of the material surface, and it can be quantitatively measured by analyzing a reaction product between the surface and water. If high-nickel material powder is immersed in water, a surface reaction occurs. During the reaction, the pH of the water increases (with dissolution of the alkaline impurities), and the alkaline content is quantified by pH titration. Result of the titration is the content of alkaline impurities. The content of alkaline impurities can be measured as follows: 5.0 g of the high-nickel material powder was immersed in 100 ml of deionized water, and they were stirred in a sealed glass flask for 10 minutes. After stirring to dissolve the alkalis, a suspension of the powder in water was filtered to obtain a clarified solution. Then, during addition of 0.1 M HCl at a rate of 0.5 ml/min under stirring, 90 ml of the clarified solution was titrated by recording a pH curve, until the pH reached 3. A reference voltage curve was obtained through titration of a suitable mixture of LiOH and $Li_2CO_3$ dissolved in deionized water in low concentrations. In almost all cases, two different platforms were observed. An upper platform with endpoint y1 (in ml) in pH 8~9 was balanced $OH^-/H_2O$, followed by balanced $CO_3^{2-}$/$HCO_3^-$, and a lower platform with endpoint y2 (in ml) in pH 4~6 was $HCO_3^-/H_2CO_3$. Inflection point y1 between the first and second platforms and inflection point y2 after the second platform were obtained from corresponding minimum values of derivative dpH/dVol of the pH curve. The second inflection point was generally close to pH 4.7. The result is then expressed in terms of LiOH and $Li_2CO_3$ weight percentages as shown in the following formulas (3) and (4):

$$Li_2CO_3\text{wt\%} = \frac{73.89}{1000} \times (y2 - y1) \quad （3）$$

$$\text{LiOHwt\%} = \frac{23.95}{1000} \times (2y1 - y2) \quad （4）$$

(2) XPS measurement of the high-nickel positive electrode material

X-ray photoelectron spectroscopy (XPS) can perform analysis for a depth range from a material surface to about 5 nm to 10 nm (generally about 5 nm), and thus can quantitatively analyze a concentration of each element in about half region of a surface portion. In addition, a bonding state of the element can be analyzed by performing narrow scan analysis. X-ray photoelectron spectroscopy (XPS) can be performed using, for example, ULVAC-PHI, and X-ray photoelectron spectroscopy (QuanteraII). X-ray source was of monochrome Al 100 $\mu$m, 25 W, and 15 kV; there was no etching on surface; the photoelectron takeoff angle was 45°; and the binding energy correction was setting C-C peak of C1s spectrum to be 284.6 eV. XPS of the high-nickel material of the present disclosure was measured, and according to an XPS spectrogram obtained, peak separation and curve fitting were performed on peak $Ni2P_{3/2}$ of a Ni bonded portion appearing at a position where the binding energy was 850 eV~870 eV, to obtain a $Ni^{2+}$ peak area and a $Ni^{3+}$ peak area, and peak separation and curve fitting were performed on peak O1S of an O bonded portion appearing at a position where the binding energy was 526 eV~540 eV, to obtain an $O1S_{\text{lattice oxygen}}$ peak area and an $O1S_{\text{impurity oxygen}}$ peak area.

(3) Battery capacity calibration

First, the battery capacity was calibrated, the battery was charged to 4.25 V at a normal temperature of 25 °C with a 1/3C current, stood for 30 min, then was discharged to 2.5 V with a 1/3C current, stood for 30 min, and was cycled twice, in which a second discharging capacity was set to be C0, and subsequent DCIR test was performed based on this.

(4) DCIR test (with a guard voltage of 1.0 V~4.4 V and a test temperature of 25 °C)

a. performing 0.2 C0 constant-current charging at 25 °C to 10% C0, leaving for 2 h [end voltage being denoted as V1], testing DCIR (discharging for 30 s at 1.5 C0 [end voltage being denoted as V2], and leaving for 30 min [end voltage being denoted as V3]; charging for 30 s at 1.5 C0 [end voltage being denoted as V4], and leaving for 5 min), discharging to 2.5 V/cell at 0.33 C0, and leaving for 30 min.

b. performing 0.2 C0 constant-current charging at 25 °C to 20% C0, leaving for 2 h [end voltage being denoted as V1], testing DCIR (discharging for 30 s at 1.5 C0 [end voltage being denoted as V2], and leaving for 30 min [end voltage being denoted as V3]; charging for 30 s at 1.5 C0 [end voltage being denoted as V4], and leaving for 5 min), discharging to 2.5 V/cell at 0.33 C0, and leaving for 30 min.

c. performing 0.2 C0 constant-current charging at 25 °C to 50% C0, leaving for 2 h [end voltage being denoted as V1], testing DCIR (discharging for 30 s at 1.5 C0 [end voltage being denoted as V2], and leaving for 30 min [end voltage being denoted as V3]; charging for 30 s at 1.5 C0 [end voltage being denoted as V4], and leaving for 5 min), discharging to 2.5 V/cell at 0.33 C0, and leaving for 30 min.

d. performing 0.2 C0 constant-current charging at 25 °C to 80% C0, leaving for 2 h [end voltage being denoted as V1], testing DCIR (discharging for 30 s at 1.5 C0 [end voltage being denoted as V2], and leaving for 30 min [end voltage being denoted as V3]; charging for 30 s at 1.5 C0 [end voltage being denoted as V4], and leaving for 5 min), discharging to 2.5 V/cell at 0.33 C0, and leaving for 30 min.

DCIR values at different SOCs were calculated according to the following formulas (5) and (6):

$$DCIR\ discharge=(V1-V2)/1.5\ C0*1000\ (unit:\ m\Omega) \qquad (5)$$

$$DCIR\ charge=(V4-V3)/1.5\ C0*1000\ (unit:\ m\Omega) \qquad (6)$$

The DCIR value after every 100 cycles was measured in the same way as determining the DCIR above before the cycle.

(5) Thickness expansion test of full battery of high-nickel material

The battery was charged at a constant current of 0.5 C to 4.25 V at a normal temperature, and then charged at a constant voltage to a current of 0.05 C, at which time the battery was in a fully charged state. An initial thickness of the battery in the fully charged state before storage was measured, then the battery was placed in a 60 °C oven, the thickness of the battery was measured every 20 days, and a thickness expansion rate of the battery was calculated according to the following calculation formula (7):

$$thickness\ expansion\ rate=(thickness\ after\ storage-thickness\ before\ storage)/(thickness\ before\ storage) \qquad (7)$$

(6) The high-nickel material was subjected to section test after 300 high-temperature cycles:

the high-nickel material having undergone 500 high-temperature cycles was cut using a Hitachi E-3500 ion miller, and a topographic structure of a section thereof was observed on a Hitachi S4800 cold-field emission scanning electron microscope.

(7) Test of pH

Testing method: GBIT 1717-1986, Determination of pH value of an aqueous suspension of pigments

Instrument model: METTLER TOLED pH meter

Method brief: weighing 5.0000±0.0100 g of a sample in a 100 ml glass beaker, adding 45 g of pure water, stirring with a glass rod until all the sample is dissolved in the pure water, performing ultrasonic treatment in an ultrasonic cleaner for 5 min, standing for 10 min, and then performing measurement.

(8) Conductivity test

Instrument model: powder resistivity tester

Method brief: adjusting a depth of a material cavity to 10 mm; adding a sample powder to be tested into the material cavity using a spoon until the cavity is filled up, flattening the sample, rotating a hand wheel, adjusting an intensity of pressure, adjusting the intensity of pressure to 4, 8, 12, 16, and 20 MPa successively, maintaining each intensity of pressure for 5 s, and reading and recording data.

(9) Specific surface area test

Testing method: GBIT 19587-2017, Determination of the Specific Surface Area of Solids by Gas Adsorption Using the BET Method

Instrument model: Tristar 3020 specific surface area analyzer

Method brief: weighing $3.0000 \pm 0.1000$ g of the sample, vacuum-degassing the sample at 300 °C for 1.0 h to completely degas, removing surface adsorbate, and calculating a specific surface area of particles through an amount of nitrogen adsorbed by a nitrogen adsorption method.

(10) Average particle size test

Testing method: GBIT 19077-2016, Particle Size Analysis-Laser Diffraction Methods

Instrument model: Malvern laser particle diameter tester

Method brief: placing an appropriate amount of the sample in a 100 mL beaker, adding an appropriate amount of water, performing ultrasonic treatment for 15 s at 240 W, and pouring the resultant into a sample loading system all at once to be fully dispersed so that opacity is 8-15%, and measuring the particle size distribution using the principle of laser diffraction.

I. XPS and fitting test of the high-nickel positive electrode material

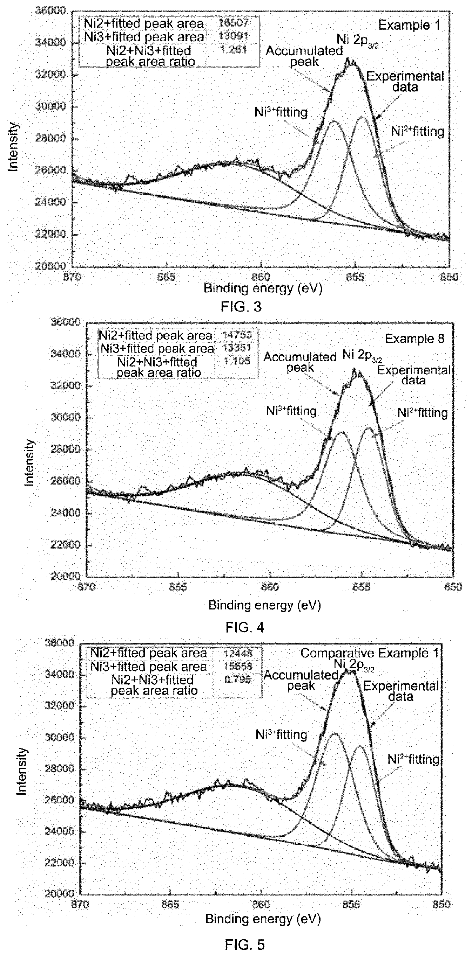

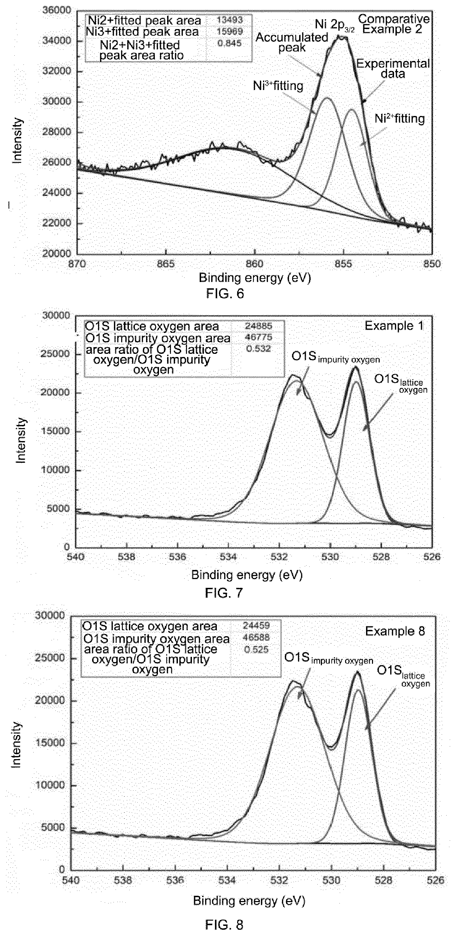

Results of area ratio after peak separation and fitting of $Ni2P_{3/2}$ and O1S of XPS test of the high-nickel positive electrode material prepared in various examples and comparative examples are shown in Table 1 below, wherein the peak separation and fitting of $Ni2P_{3/2}$ in Example 1, Example 8, Comparative Example 1, and Comparative Example 2 are as shown in FIG. 3, FIG. 4, FIG. 5, and FIG. 6 in sequence, and the peak separation and fitting of the O1S in Example 1, Example 8, Comparative Example 1, and Comparative Example 2 are as shown in FIG. 7, FIG. 8, FIG. 9, and FIG. 10.

Table 1. Results of Area Ratio after Peak Separation and Fitting of Ni2P$_{3/2}$ and O1S of XPS Test of the High-nickel Positive Electrode Material Prepared in Various Examples and Comparative Examples

| Group | S1/(S1+S2) | a/b | O1S$_{\text{lattice oxygen}}$/O1S$_{\text{impurity oxygen}}$ area ratio | LiOH/ wt% | Li$_2$CO$_3$/ wt% | pH | Conductivity (S/cm) | Specific surface area (m$^2$/g) | Average particle size ($\mu$m) |
|---|---|---|---|---|---|---|---|---|---|
| Example 1 | 0.55 | 0.98 | 0.53 | 0.056 | 0.091 | 11.35 | 0.035 | 0.56 | 3.5 |
| Example 2 | 0.52 | 0.99 | 0.51 | 0.096 | 0.088 | 11.40 | 0.033 | 0.67 | 3.6 |
| Example 3 | 0.53 | 1.01 | 0.52 | 0.079 | 0.094 | 11.28 | 0.038 | 0.66 | 3.7 |
| Example 4 | 0.56 | 1.13 | 0.54 | 0.059 | 0.062 | 11.50 | 0.029 | 0.55 | 3.5 |
| Example 5 | 0.58 | 1.18 | 0.55 | 0.065 | 0.051 | 11.38 | 0.032 | 0.71 | 3.8 |
| Example 6 | 0.58 | 1.15 | 0.56 | 0.056 | 0.071 | 11.39 | 0.039 | 0.63 | 40 |
| Example 7 | 0.59 | 1.20 | 0.56 | 0.046 | 0.075 | 11.45 | 0.033 | 0.56 | 3.7 |
| Example 8 | 0.56 | 1.13 | 0.54 | 0.063 | 0.090 | 11.29 | 0.035 | 0.58 | 4.1 |
| Example 9 | 0.57 | 1.18 | 0.53 | 0.056 | 0.079 | 11.33 | 0.036 | 0.64 | 3.8 |
| Example 10 | 0.55 | 1.19 | 0.55 | 0.059 | 0.089 | 11.41 | 0.032 | 0.56 | 3.2 |
| Example 11 | 0.59 | 1.15 | 0.54 | 0.070 | 0.069 | 11.42 | 0.038 | 0.61 | 30 |
| Example 12 | 0.57 | 1.16 | 0.55 | 0.059 | 0.077 | 11.38 | 0.033 | 0.70 | 3.5 |
| Example 13 | 0.52 | 1.09 | 0.40 | 0.189 | 0.277 | 11.47 | 0.033 | 0.56 | 3.6 |
| Example 14 | 0.52 | 1.05 | 0.42 | 0.199 | 0.246 | 11.53 | 0.031 | 0.59 | 3.3 |
| Example 15 | 0.51 | 1.06 | 0.43 | 0.169 | 0.186 | 11.56 | 0.028 | 0.63 | 3.8 |
| Example 16 | 0.54 | 1.13 | 0.51 | 0.078 | 0.078 | 11.48 | 0.031 | 0.63 | 3.9 |
| Example 17 | 0.55 | 1.18 | 0.48 | 0.128 | 0.136 | 11.49 | 0.033 | 0.68 | 3.6 |
| Example 18 | 0.55 | 1.16 | 0.47 | 0.138 | 0.166 | 11.50 | 0.030 | 0.68 | 3.6 |
| Example 19 | 0.54 | 1.11 | 0.53 | 0.118 | 0.066 | 11.46 | 0.037 | 0.71 | 3.5 |
| Example 20 | 0.53 | 1.15 | 0.52 | 0.119 | 0.126 | 11.44 | 0.033 | 0.66 | 3.7 |
| Example 21 | 0.54 | 1.12 | 0.53 | 0.055 | 0.035 | 11.45 | 0.038 | 0.69 | 3.7 |
| Example 22 | 0.55 | 1.13 | 0.54 | 0.049 | 0.036 | 11.48 | 0.041 | 0.70 | 3.7 |
| Example 23 | 0.55 | 1.15 | 0.54 | 0.015 | 0.135 | 11.49 | 0.032 | 0.59 | 4.2 |

| Group | S1/(S1+S2) | a/b | O1S$_{lattice\ oxygen}$/O1S$_{impurity\ oxygen}$ area ratio | LiOH/ wt% | Li$_2$CO$_3$/ wt% | pH | Conductivity (S/cm) | Specific surface area (m$^2$/g) | Average particle size ($\mu$m) |
|---|---|---|---|---|---|---|---|---|---|
| Example 24 | 0.55 | 1.13 | 0.55 | 0.029 | 0.096 | 11.50 | 0.29 | 0.71 | 3.6 |
| Example 25 | 0.56 | 1.01 | 0.56 | 0.045 | 0.112 | 11.30 | 0.033 | 0.52 | 3.9 |
| Example 26 | 0.55 | 1.03 | 0.53 | 0.129 | 0.128 | 11.49 | 0.031 | 0.73 | 30 |
| Comparative Example 1 | 0.41 | 0.88 | 0.43 | 0.386 | 0.291 | 11.58 | 0.023 | 0.78 | 3.7 |
| Comparative Example 2 | 0.39 | 0.79 | 0.35 | 0.276 | 0.321 | 11.60 | 0.026 | 0.91 | 3.8 |
| Comparative Example 3 | 0.45 | 1.59 | 0.33 | 0.316 | 0.293 | 11.66 | 0.023 | 0.87 | 4.2 |
| Comparative Example 4 | 0.43 | 1.70 | 0.30 | 0.276 | 0.311 | 11.68 | 0.019 | 0.87 | 3.8 |
| Comparative Example 5 | 0.42 | 1.78 | 0.36 | 0.313 | 0.291 | 11.62 | 0.023 | 0.73 | 3.7 |
| Comparative Example 6 | 0.46 | 1.55 | 0.43 | 0.189 | 0.286 | 11.45 | 0.026 | 0.71 | 3.7 |

As shown in Examples 1~26 and Comparative Examples 1~6, upon measurement, the high-nickel positive electrode material prepared in the present disclosure satisfies S1/(S1+S2)>0.5 and $0.9<\alpha/\beta<1.5$, indicating that the amount of $Ni^{3+}$ is relatively small, and the amount of $Ni^{2+}$ is relatively large in the matrix surface of the high-nickel material, which avoids oxidation of the surface of the positive electrode material during lithium deintercalation, facilitates maintaining structural stability of the positive electrode material, thereby avoiding loss of the positive electrode active material and the electrolytic solution, and further improving the capacity of the positive electrode material, so that the high-temperature cycle performance of the high-nickel positive electrode material is obviously improved. In addition, since the amount of $Ni^{3+}$ is relatively small and the amount of $Ni^{2+}$ is relatively large in the material surface, internal cracks of the material during charging and discharging can be reduced, so that the internal structure of the material is stable, then when the positive electrode material in the present disclosure is applied to a battery for long-term cycle, the DC internal resistance increase of the battery is obviously inhibited.

The peak separation and fitting of $Ni2P_{3/2}$ in Example 1, Example 8, Comparative Example 1, and Comparative Example 2 are as shown in FIG. 3, FIG. 4, FIG. 5, and FIG. 6 in sequence, the peak separation and fitting of O1S in Example 1, Example 8, Comparative Example 1, and Comparative Example 2 are as shown in FIG. 7, FIG. 8, FIG. 9, and FIG. 10. The area ratio S1/(S1+S2) of the high-nickel positive electrode material prepared in the present disclosure to the material prepared in the comparative examples is obviously changed, and the area ratio S1/(S1+S2) of the samples is greater than 1 in the examples of the present disclosure, which indicates that the amount of $Ni^{2+}$ in the material surface is obviously greater than the amount of $Ni^{3+}$, while the area ratio S1/(S1+S2) in the comparative examples is less than 1; and the area ratio of $O1S_{lattice\ oxygen}/O1S_{impurity\ oxygen}$ is substantially greater than 0.5, indicating that the alkaline impurities are relatively low in the material surfaces of the examples.

It can be seen from the surface alkaline impurity test that a total sum of the surface alkaline impurities of the high-nickel positive electrode material in the examples of the present disclosure is lower, and a sum of the surface alkaline impurities LiOH and $Li_2CO_3$ tested in the samples of the comparative examples is higher.

Table 2 shows performance test comparison of the high-nickel positive electrode materials of Examples 1~26 and Comparative Examples 1~6 in the present disclosure.

Table 2. Performance Test of High-nickel Positive Electrode Materials of Examples 1~26 and Comparative Examples 1~6

| Group | 300-cycle capacity retention rate (2.5 V-4.2 V) | 300-cycle capacity retention rate (2.5 V-4.25 V) | 100-cycle DCR growth rate | 200-cycle DCR growth rate | 300-cycle DCR growth rate | 20-day thickness expansion rate | 40-day thickness expansion rate | 60-day thickness expansion rate |
|---|---|---|---|---|---|---|---|---|
| Example 1 | 95.1% | 90.5% | 8.9°,6 | 12.6°,6 | 15.8% | 5.5% | 9.1% | 13.8% |
| Example 2 | 93.3% | 88.1% | 6.5% | 9.1% | 12.7% | 5.2°,6 | 9.2°,6 | 13.7% |
| Example 3 | 93.0% | 89.5% | 8.8°,6 | 12.5% | 16.8°,6 | 4.8°,6 | 8.5% | 12.9% |
| Example 4 | 93.8% | 89.6% | 7.8% | 12.7% | 18.2°,6 | 4.9% | 9.3°,6 | 13.2% |
| Example 5 | 95.5% | 90.7% | 7.7% | 11.9% | 15.1% | 5.1% | 8.8°,6 | 12.1% |
| Example 6 | 95.6% | 91.1% | 8.5% | 12.8°,6 | 15.3°,6 | 5.0°,6 | 7.8% | 11.3% |
| Example 7 | 95.5% | 91.5% | 8.8°,6 | 13.3°,6 | 16.9°,6 | 5.8°,6 | 8.3°,6 | 12.5% |
| Example 8 | 95.1% | 89.5% | 8.2% | 13.5% | 16.7°,6 | 5.2°,6 | 9.4% | 13.5% |
| Example 9 | 95.3% | 90.6% | 8.6°,6 | 12.9% | 15.8°,6 | 6.5% | 11.9% | 15.8% |
| Example 10 | 95.5% | 90.9% | 9.0°,6 | 14.4% | 16.9°,6 | 6.7°,6 | 10.5% | 13.8% |
| Example 11 | 94.8% | 91.5% | 8.6°,6 | 14.5% | 18.1% | 5.5% | 11.9% | 15.8% |
| Example 12 | 94.7% | 91.1% | 8.8°,6 | 13.6°,6 | 16.5% | 5.6°,6 | 9.9°,6 | 13.7% |
| Example 13 | 92.7% | 80.1% | 7.8% | 10.6°,6 | 12.7% | 15.1% | 26.9°,6 | 35.3% |
| Example 14 | 93.5% | 83.5% | 6.9% | 9.7°,6 | 12.0°,6 | 14.5% | 23.8% | 33.9% |
| Example 15 | 93.7% | 85.8% | 6.6% | 8.6°,6 | 13.0% | 13.1% | 23.9% | 32.1% |
| Example 16 | 94.5% | 90.5% | 8.9°,6 | 13.5% | 15.9°,6 | 4.8°,6 | 7.3% | 12.1% |
| Example 17 | 94.0% | 88.9% | 8.1% | 15.3°,6 | 19.9°,6 | 4.8°,6 | 5.3°,6 | 10.5% |

(continued)

| Group | 300-cycle capacity retention rate (2.5 V-4.2 V) | 300-cycle capacity retention rate (2.5 V-4.25 V) | 100-cycle DCR growth rate | 200-cycle DCR growth rate | 300-cycle DCR growth rate | 20-day thickness expansion rate | 40-day thickness expansion rate | 60-day thickness expansion rate |
|---|---|---|---|---|---|---|---|---|
| Example 18 | 93.8% | 88.9% | 8.3°,6 | 16.1% | 21.7% | 4.5°,6 | 6.3°,6 | 10.1% |
| Example 19 | 95.5% | 91.5% | 8.0°,6 | 12.6°,6 | 14.5% | 4.5°,6 | 7.1% | 12.1% |
| Example 20 | 94.9% | 90.3% | 8.7°,6 | 13.3% | 16.9°,6 | 5.9°,6 | 8.5% | 14.8% |
| Example 21 | 96.5% | 92.8% | 5.0°,6 | 8.6°,6 | 11.8% | 4.1% | 6.5% | 8.5% |
| Example 22 | 95.8% | 91.7% | 6.3°,6 | 9.4% | 12.6°,6 | 5.3°,6 | 6.9% | 9.9°,6 |
| Example 23 | 93.9% | 88.5% | 8.5% | 13.7% | 18.5% | 6.5% | 8.1% | 14.1% |
| Example 24 | 92.0% | 87.9% | 8.2% | 13.6°,6 | 16.5% | 6.8°,6 | 8.5% | 14.4% |
| Example 25 | 94.5% | 91.5% | 6.5% | 8.7°,6 | 12.5% | 4.5°,6 | 7.1% | 11.1% |
| Example 26 | 92.6% | 87.5% | 6.8°,6 | 9.5% | 14.9% | 6.9% | 10.5% | 14.6°,6 |
| Comparative Example 1 | 92.8% | 80.1% | 12.9% | 18.5% | 22.9% | 8.8°,6 | 13.5% | 19.6°,6 |
| Comparative Example 2 | 90.8% | 75.5% | 15.6°,6 | 21.4% | 28.7°,6 | 7.8% | 14.2°,6 | 19.9% |
| Comparative Example 3 | 90.5% | 81.8°,6 | 16.5% | 22.5% | 29.9°,6 | 9.2°,6 | 15.6°,6 | 21.1% |
| Comparative Example 4 | 92.1% | 82.9% | 16.1% | 23.4% | 28.3°,6 | 9.3°,6 | 13.8% | 18.9% |
| Comparative Example 5 | 91.9% | 80.5% | 15.8% | 23.5% | 27.9°,6 | 9.5% | 13.7% | 18.8% |
| Comparative Example 6 | 91.4°,6 | 87.5% | 12.8°,6 | 23.5% | 26.9°,6 | 8.5% | 12.7% | 19.8°,6 |

According to 1C/1C 300-cycle capacity retention rate of full battery at a high temperature of 45 °C of the high-nickel positive electrode material prepared in Examples 1~26 and Comparative Example 1-6 of the present disclosure at different voltages, it can be seen from the high-temperature performance test that the high-temperature cycle performance of the positive electrode materials in the examples and comparative examples of the present disclosure obviously changes, wherein under the condition of 2.5 V-4.2 V, the capacity retention rates of the positive electrode material of some examples of the present disclosure are about 95%, while the capacity retention rates of the positive electrode in the comparative examples are all 93% or less, and as there are phase changes when tested under the condition of 2.5 V-4.25 V, the high-temperature cycle performances of the samples in the examples and the comparative examples are all reduced, but some examples are still obviously superior to the comparative examples.

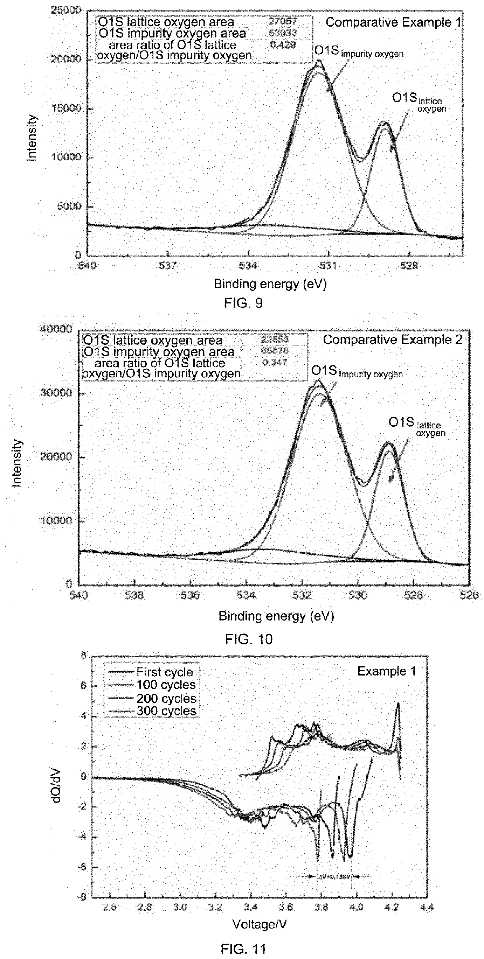

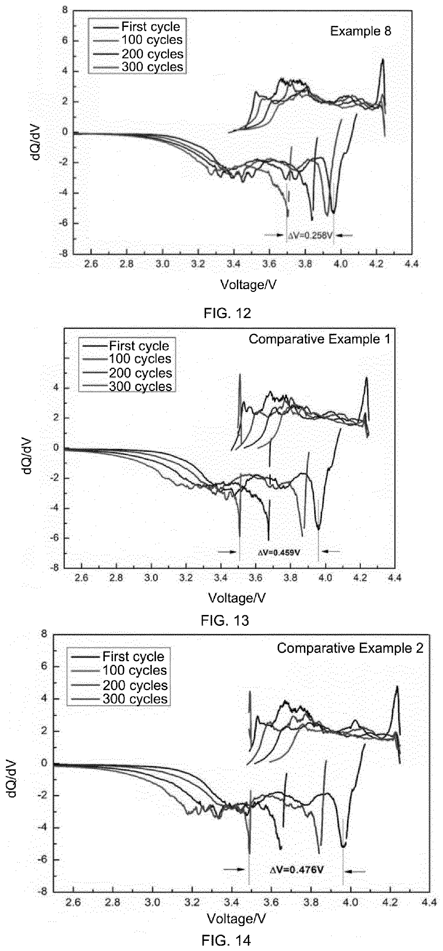

DC internal resistance increase of the high-nickel positive electrode material prepared according to the examples and the comparative examples of the present disclosure was tested after each 100 cycles of full battery at 1C/1C at a high temperature of 45 °C under the condition of 2.5 V-4.2 V, and comparative analysis of capacity differential curves of Example 1, Example 8, Comparative Example 1, and Comparative Example 2 is shown in FIG. 11, FIG. 12, FIG. 13, and FIG. 14, in which it can be seen from Table 1 and the drawings that the DC internal resistance increase of the positive electrode material in the examples and comparative examples of the present disclosure is obviously changed, where the DC internal resistance increase in the examples is obviously lower than that in the comparative examples. It can be seen from FIGS. 11, 12, 13, and 14 that irreversible phase transition in Example 1 is minimal, and a voltage difference ΔV after 300 cycles is minimal, and it can be seen that when both high valence and low valence are doped, the structural stability is better, and the material surface and the internal structure are more stable.

Full batteries were made by the high-nickel positive electrode material prepared according to the examples and the comparative examples of the present disclosure, and then tested for gas generation during storage at a high temperature of 60 °C, in which the battery thickness was measured every 20 days, and the thickness expansion rate was calculated. It can be seen from Table 1 that the thickness increase of the batteries of the examples and comparative examples obviously changes, but the thickness expansion increase of the examples is obviously lower than that of the comparative examples.

It can be seen from Examples 12-18 that, by controlling a primary synthesizing temperature of the material within the range in the present disclosure, the positive electrode material has an excellent electrochemical performance, and if the temperature of the primary heat treatment is lower than the range defined in the present disclosure (Example 12) or the temperature of the primary heat treatment is higher than the range defined in the present disclosure (Example 18), there are always the disadvantages of poor cycle performance and high expansion rate.

It can be seen from comparison between Examples 1-22 and Example 23 that, in the examples of the present disclosure, by coating the material with the second layer on the basis of the first-layer coating, not only the alkaline impurities in the material surface are reduced, but also the material surface is protected, decomposition and gas generation of $Li_2CO_3$ in the alkaline impurities in the material surface are reduced, and gas generation by side reaction between the alkaline impurities in the material surface and the electrolytic solution is reduced, thus the cycle performance of the material can be further improved. The positive electrode material obtained by coating the matrix material only once in Example 23 will have the disadvantage of poor cycle performance.

It can be seen from comparison between Examples 1-22 and Example 24 that, in the examples of the present disclosure, by primarily coating an inner layer while secondarily coating the material, the amount of $Ni^{2+}$ in the surface of the high-nickel positive electrode material is unchanged or further increased by valence balance, thus improving the structural stability of the material, and avoiding the contact of the material with moisture in the air to generate alkaline impurities, reducing the gas generation of the material, further improving the cycle performance of the material and reducing the expansion rate of the material. The positive electrode material obtained by only secondarily coating the matrix material in Example 24 will have the disadvantages of poor cycle performance and high expansion rate.

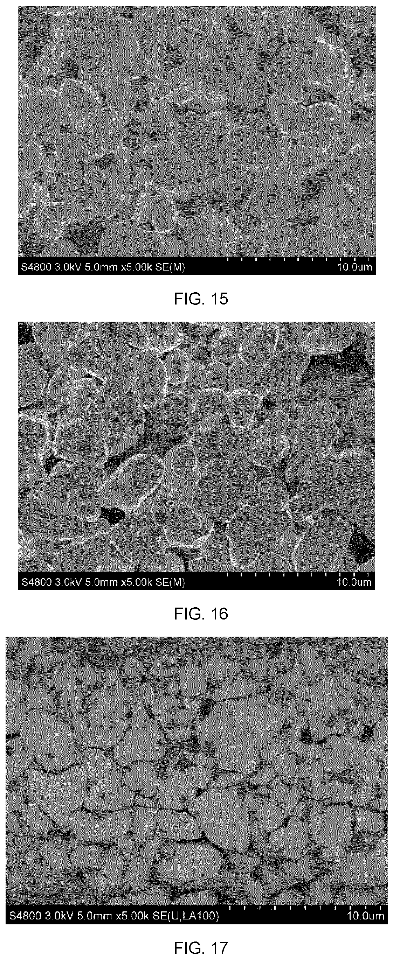

The high-nickel materials according to Examples 1, 8, 25, and 26 and Comparative Examples 1, 2, and 6 were subjected to argon ion section analysis after 300 cycles. See FIGS. 15, 16, 19, and 20 for results of section analysis of Examples 1, 8, 25, and 26, and see FIGS. 17, 18, and 21 for results of section analysis of Comparative Examples 1, 2, and 6. By comparing the results of the section analysis of the examples and comparative examples, it can be seen that no cracks occur inside the materials of Examples 1, 8, 25, and 26, while cracks appear in the materials of Comparative Examples 1, 2, and 6, which further indicates that simultaneously doping both high valence and low valence is beneficial to the structural stability of the material, thus, it is beneficial to further improving the cycle performance of the material.

The above-mentioned are merely for typical examples of the present disclosure and not intended to limit the present disclosure, and for one skilled in the art, various changes and variations can be made to the present disclosure. Any modifications, equivalent substitutions, improvements and the like made within the spirit and principle of the present disclosure should be all covered within the scope of protection of the present disclosure.

**Industrial Applicability**

The present disclosure provides a high-nickel positive electrode material and a preparation method therefor, and a lithium ion battery, wherein the high-nickel positive electrode material in the present disclosure has a small amount of $Ni^{3+}$ and a large amount of $Ni^{2+}$ in the surface, such that oxidation of the surface of the high-nickel positive electrode material can be avoided during lithium deintercalation, so that the high-temperature cycle performance and structural stability of the high-nickel positive electrode material can be improved, thereby avoiding loss of the positive electrode active material and the electrolytic solution, and further improving the capacity of the positive electrode material, so that the high-nickel positive electrode material is obviously improved on the high-temperature cycle performance, which has excellent practical performance.

**Claims**

**1.** A high-nickel positive electrode material, **characterized in that** a general chemical formula of the high-nickel positive electrode material is represented by formula (1):

$$Li_xNi_{1-(a+b+c+d+e+f)}Co_aM1_bM2_cM3_dM4_eM5_fO_2 \qquad (1)$$

where $0.95 \leq x \leq 1.2$, $0 \leq a \leq 0.15$, $0 \leq b \leq 0.10$, $0 \leq c \leq 0.05$, $0 \leq d \leq 0.05$, $0 \leq e \leq 0.05$, $0 \leq f \leq 0.05$, and $0 < a+b+c+d+e+f \leq 0.2$; and the high-nickel positive electrode material is subjected to powder XPS measurement using $AlK\alpha$ rays, and after peak separation and fitting are performed on $Ni2P_{3/2}$ peak appearing when a binding energy is in a range of 850 eV~870 eV, a peak area of $Ni^{2+}$ is set to be S1, a peak area of $Ni^{3+}$ is set to be S2, a peak width at half height of $Ni^{2+}$ is set to be $\alpha$, a peak width at half height of $Ni^{3+}$ is set to be $\beta$, and S1, S2, $\alpha$, and $\beta$ satisfy a

following relationship:

$$S1/(S1+S2)>0.5 \text{ and } 0.9<\alpha/\beta<1.5 \quad (2).$$

2. The positive electrode material according to claim 1, wherein the positive electrode material comprises a secondary particle and/or a primary particle, at least a part of surface of the primary particle is coated with a coating layer, and the secondary particle comprises a plurality of primary particles with the coating layer.

3. The positive electrode material according to claim 2, wherein the coating layer comprises at least one of following features (1)~(11):

(1) the coating layer comprises a first coating layer and a second coating layer, the first coating layer is formed on the surface of the primary particle, and the second coating layer is formed on a surface of the first coating layer;
(2) the coating layer comprises a first coating layer, and the first coating layer is formed on the surface of the primary particle;
(3) the coating layer comprises a second coating layer, and the second coating layer is formed on the surface of the primary particle;
(4) the coating layer comprises a first coating layer and a second coating layer, and the first coating layer comprises an element with a valence greater than or equal to positive trivalence in the high-nickel positive electrode material;
(5) the coating layer comprises a first coating layer and a second coating layer, and the first coating layer comprises at least one of Al, Ti, P, Si, Nb, Y, W, Cr, Zr, and La;
(6) the coating layer comprises a first coating layer and a second coating layer, and the first coating layer comprises a compound containing at least one of Al, Ti, P, Si, Nb, Y, W, Cr, Zr, and La;
(7) the coating layer comprises a first coating layer and a second coating layer, the first coating layer comprises a compound containing at least one of Al, Ti, P, Si, Nb, Y, W, Cr, Zr, and La, and the compound is at least one of oxide, hydroxide, or salt;
(8) the coating layer comprises a first coating layer and a second coating layer, and the second coating layer comprises a compound containing at least one of B, La, and Al;
(9) the coating layer comprises a first coating layer and a second coating layer, the second coating layer comprises a compound containing at least one of B, La, and Al, and the compound is at least one of oxide, acid, and lithium-containing salt;
(10) the coating layer comprises a first coating layer and a second coating layer, the second coating layer comprises a boron-containing compound, and the boron-containing compound comprises at least one of boron-containing oxide, boron-containing acid, and salt containing boron and lithium; and
(11) the coating layer comprises a first coating layer and a second coating layer, the second coating layer comprises a boron-containing compound, and the boron-containing compound comprises at least one of $B_2O_3$, $H_3BO_3$, $Li_2O\text{-}B_2O_3$, $Li_3BO_3$, $Li_2B_4O_7$, $Li_2B_2O_7$, and $Li_2B_8O_{13}$.

4. The positive electrode material according to any one of claims 1-3, wherein the material comprises at least one of following features (1)~(18):

(1) the M1 comprises Mn and/or Al;
(2) the M2 comprises an element with a valence greater than or equal to positive tetravalence in the high-nickel positive electrode material;
(3) the M3 comprises an element with a valence equal to positive bivalence in the high-nickel positive electrode material;
(4) the M2 and the M3 each comprise at least one of Zr, Ti, Nb, Ce, Hf, W, Mo, Ta, Ge, Sn, Sr, Mg, and Ba, and M2 and M3 are different;
(5) the M4 comprises an element with a valence greater than or equal to positive trivalence in the high-nickel positive electrode material;
(6) the M4 comprises at least one of Al, Ti, P, Si, Nb, Y, W, Cr, Zr, and La;
(7) the M5 comprises at least one of B, La, and Al;
(8) the high-nickel positive electrode material is subjected to the powder XPS measurement using the AlK$\alpha$ rays: after the peak separation and the fitting are performed on the Ni2P$_{3/2}$ peak appearing when the binding energy is in the range of 850 eV~870 eV, an area ratio of Ni$^{2+}$/Ni$^{3+}$ is greater than 1;
(9) the high-nickel positive electrode material is subjected to the powder XPS measurement using the AlK$\alpha$

rays: after the peak separation and the fitting are performed on an O1S peak appearing when a binding energy is in a range of 526 eV~540 eV, an area ratio of $O1S_{lattice\ oxygen}/O1S_{impurity\ oxygen}$ is greater than 1/2;

(10) a mass content of LiOH in the high-nickel positive electrode material is less than 0.3 wt%;

(11) a mass content of $Li_2CO_3$ in the high-nickel positive electrode material is less than 0.3 wt%;

(12) a crystal structure of the high-nickel positive electrode material belongs to a hexagonal crystal structure or a monoclinic crystal structure;

(13) a crystal particle morphology of the high-nickel positive electrode material comprises at least one of an approximate spherical shape, an approximate cubic shape, and an approximate rectangular parallelepiped shape;

(14) pH of the high-nickel positive electrode material is: 10<pH<12;

(15) pH of the high-nickel positive electrode material is: 10.5<pH<11.7;

(16) a powder conductivity of the high-nickel positive electrode material is greater than 0.02 S/cm;

(17) a specific surface area of the high-nickel positive electrode material is 0.3 $m^2/g$~0.8 $m^2/g$; and

(18) an average particle size of the high-nickel positive electrode material is 2.5 $\mu$m~4.5 $\mu$m.

5. A preparation method for a high-nickel positive electrode material, **characterized by** comprising steps of:

mixing a metal composite hydroxide precursor, a lithium-containing compound, and a dopant, and then performing a primary heat treatment to obtain a matrix material, wherein

the dopant comprises a compound containing an element M2 and a compound containing an element M3, the compound containing the element M2 is at least one of an oxide, a hydroxide, and a lithium metal oxide containing the M2, and a valence of the M2 in the compound is greater than or equal to positive tetravalence, the compound containing the element M3 is at least one of an oxide and a hydroxide containing the M3, and a valence of the M3 in the compound is positive bivalence; and

coating the matrix material to obtain the high-nickel positive electrode material.

6. The preparation method according to claim 5, wherein the method comprises at least one of following features (1)~(12):

(1) a mass ratio of the metal composite hydroxide precursor, the lithium-containing compound, and the dopant is 1-(0.46~0.49)-(0.001~0.005);

(2) a mass ratio of the metal composite hydroxide precursor, the lithium-containing compound, and the dopant is 1-(0.46~0.48)-(0.001~0.003);

(3) an atomic ratio of total metal Me in the metal composite hydroxide precursor to Li in the lithium-containing compound is 1.0<Li/Me<1.2;

(4) the lithium-containing compound comprises a lithium-containing salt and a lithium-containing hydroxide;

(5) the lithium-containing compound comprises at least one of lithium carbonate, lithium hydroxide, lithium nitrate, and lithium acetate;

(6) the element M2 and the element M3 each comprise at least one of Zr, Ti, Nb, Ce, Hf, W, Mo, Ta, Ge, Sn, Sr, Mg, and Ba, and the M2 and the M3 are different;

(7) a molar ratio $n_{M2}:n_{M3}$ of the M2 to the M3 in the dopant is greater than or equal to 2:1;

(8) an average particle size of the dopant is 10 nm~50 nm;

(9) a temperature of the primary heat treatment is 680 °C~900 °C;

(10) a time of the primary heat treatment is 5 h~20 h;

(11) a heating rate of the primary heat treatment is 50 °C/h~550 °C/h; and

(12) an oxygen content of the matrix material is greater than or equal to 85%.

7. The preparation method according to claim 5 or 6, wherein the method comprises a step of mixing the matrix material and a first coating agent, and then performing a secondary heat treatment to obtain a primary coating resultant, and the method comprises at least one of following features (1)~(12):

(1) a mass ratio of the matrix material to the first coating agent is 1000:(0.5~3);

(2) the first coating agent comprises a metal element or a non-metal element with a valence greater than or equal to positive trivalence;

(3) the first coating agent comprises at least one of an oxide, a salt, or a hydroxide of a metal element or a non-metal element with a valence greater than or equal to positive trivalence;

(4) the first coating agent comprises a metal element or a non-metal element with a valence greater than or equal to positive trivalence, and the metal element or the non-metal element comprises at least one of Al, Ti, P, Si, Nb, Y, W, Cr, Zr, or La;

(5) the first coating agent comprises at least one of lithium aluminate, lithium titanate, lithium lanthanum titanate, yttrium oxide, aluminum oxide, and titanium oxide;

(6) an average particle size of the first coating agent is 10 nm~50 nm;

(7) a temperature of the secondary heat treatment is 600 °C~800 °C;

(8) a time of the secondary heat treatment is 1 h~20 h;

(9) a heating rate of the secondary heat treatment is 50 °C/h~550 °C/h;

(10) after the secondary heat treatment, a step of washing under a constant-temperature condition, and performing a drying treatment under a vacuum condition after the washing is further comprised, and a temperature of the constant-temperature condition is 10 °C~25 °C;

(11) after the secondary heat treatment, a step of washing under a constant-temperature condition, and performing a drying treatment under a vacuum condition after the washing is further comprised, and a temperature of the drying treatment is 100 °C~200 °C; and

(12) an oxygen content of the primary coating resultant is greater than or equal to 85%.

8. The preparation method according to claim 7, wherein the method further comprises a step of mixing the primary coating resultant and a second coating agent and then performing a tertiary heat treatment, and the method comprises at least one of following features (1)~(9):

   (1) the second coating agent comprises a compound containing at least one of B, La, and Al;

   (2) the second coating agent comprises a compound containing at least one of B, La, and Al, and the compound is an oxide, an acid, or a lithium-containing salt;

   (3) the second coating agent comprises a boron-containing compound;

   (4) the second coating agent comprises a boron-containing compound, and the boron-containing compound comprises a boron-containing oxide, a boron-containing acid, or a salt containing boron and lithium;

   (5) the second coating agent comprises a boron-containing compound, and the boron-containing compound comprises at least one of $B_2O_3$, $H_3BO_3$, $Li_2O\text{-}B_2O_3$, $Li_3BO_3$, $Li_2B_4O_7$, $Li_2B_2O_7$, and $Li_2B_8O_{13}$;

   (6) a mass ratio of the primary coating resultant to the second coating agent is 1:(0.0005-0.005);

   (7) a temperature of the tertiary heat treatment is 200 °C~600 °C;

   (8) a time of the tertiary heat treatment is 1 h~20 h; and

   (9) a heating rate of the tertiary heat treatment is 50 °C/h~550 °C/h.

9. The preparation method according to any one of claims 5-8, wherein the metal composite hydroxide precursor is obtained by performing a mixing treatment on a metal salt solution, a complexing agent, and a pH regulator.

10. The preparation method according to claim 9, wherein the method comprises at least one of following features (1)~(10):

    (1) a mass ratio of the metal salt solution, the complexing agent, and the pH regulator is 1-(0.01~0.10):(0.1~0.8);

    (2) the metal salt solution comprises at least one of a nickel salt solution, a cobalt salt solution, a manganese salt solution, and an aluminum salt solution;

    (3) the complexing agent comprises at least one of ammonia, ammonium sulfate, ammonium chloride, ammonium carbonate, ammonium fluoride, hydrazine, ethylenediamine tetraacetic acid, nitrilotriacetic acid, uracil diacetic acid, and glycine;

    (4) the pH regulator comprises at least one of sodium hydroxide and potassium hydroxide;

    (5) pH of the mixing treatment is 9~13;

    (6) a temperature of the mixing treatment is 10 °C~80 °C;

    (7) a time of the mixing treatment is 10 h~200 h;

    (8) the mixing treatment is performed in a stirring state at a stirring rate of 800 rpm-1200 rpm;

    (9) after the mixing treatment, steps of solid-liquid separation, washing, and drying are further comprised; and

    (10) an average particle size of the metal composite hydroxide precursor is 3 $\mu$m~10 $\mu$m.

11. A lithium ion battery, **characterized in that** the lithium ion battery comprises the high-nickel positive electrode material according to any one of claims 1-4 or the high-nickel positive electrode material prepared by the method according to any one of claims 5-10.

Mixing a metal composite hydroxide precursor, a lithium-containing compound, and a dopant, and then perform a primary heat treatment to obtain a matrix material, wherein the dopant includes an element M2 and an element M3, a compound corresponding to the element M2 is oxide, hydroxide, or lithium metal oxide only containing M2, a valence of M2 in this compound is greater than or equal to positive tetravalence, a compound corresponding to the element M3 is oxide or hydroxide only containing M3, and a valence of M3 in this compound is positive bivalence

S100

Coating the matrix material to obtain the high-nickel positive electrode material

S200

FIG. 1

FIG. 2

FIG. 3

FIG. 4

FIG. 5

FIG. 6

FIG. 7

FIG. 8

FIG. 9

FIG. 10

FIG. 11

EP 4 280 304 A1

FIG. 12

FIG. 13

FIG. 14

FIG. 15

FIG. 16

FIG. 17

S4800 3.0kV 5.0mm x6.00k SE(U,LA100)     5.00um

FIG. 18

S4800 3.0kV 5.0mm x5.00k SE(M)     10.0um

FIG. 19

S4800 3.0kV 5.0mm x5.00k SE(M)     10.0um

FIG. 20

FIG. 21

FIG. 22

FIG. 23

FIG. 24

FIG. 25

FIG. 26

## INTERNATIONAL SEARCH REPORT

| | International application No. |
|---|---|
| | **PCT/CN2022/130946** |

### A. CLASSIFICATION OF SUBJECT MATTER

H01M 4/525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 正极, 阴极, 包覆, 改性, 掺杂, 双包覆, 一次包覆, 二次包覆, 第一包覆, 第二包覆, Mg, 镁, 锆, Zr, 钛, Ti, battery, cell, positive, cathode, modif+, dop+, double, primary, secondary, first, second, magnesium, zirconium, titanium

### C. DOCUMENTS CONSIDERED TO BE RELEVANT

| Category* | Citation of document, with indication, where appropriate, of the relevant passages | Relevant to claim No. |
|---|---|---|
| X | CN 112490417 A (FOSHAN UNIVERSITY) 12 March 2021 (2021-03-12) description, paragraphs [0002]-[0026] | 1-6, 9-11 |
| Y | CN 112490417 A (FOSHAN UNIVERSITY) 12 March 2021 (2021-03-12) description, paragraphs [0002]-[0026] | 3, 7-8 |
| Y | CN 111430700 A (SVOLT ENERGY TECHNOLOGY CO., LTD.) 17 July 2020 (2020-07-17) description, paragraphs 4-110 | 3, 7-8 |
| X | CN 111463411 A (TIANJIN GUOAN MENGGULI NEW MATERIALS SCIENCE & TECHNOLOGY CO., LTD.) 28 July 2020 (2020-07-28) description, paragraphs 5-92 | 1-6, 9-11 |
| Y | CN 111463411 A (TIANJIN GUOAN MENGGULI NEW MATERIALS SCIENCE & TECHNOLOGY CO., LTD.) 28 July 2020 (2020-07-28) description, paragraphs 5-92 | 3, 7-8 |
| X | CN 111244397 A (TIANJIN GUOAN MENGGULI NEW MATERIALS SCIENCE & TECHNOLOGY CO., LTD.) 05 June 2020 (2020-06-05) description, paragraphs 6-113 and 129-133 | 1-6, 9-11 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 January 2023** | **20 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/130946** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 111244397 A (TIANJIN GUOAN MENGGULI NEW MATERIALS SCIENCE & TECHNOLOGY CO., LTD.) 05 June 2020 (2020-06-05)<br>    description, paragraphs 6-113 and 129-133 | 3, 7-8 |
| X | CN 112811403 A (NANTONG RESHINE NEW MATERIAL CO., LTD.) 18 May 2021 (2021-05-18)<br>    description, paragraphs 4-54 | 1-6, 9-11 |
| Y | CN 112811403 A (NANTONG RESHINE NEW MATERIAL CO., LTD.) 18 May 2021 (2021-05-18)<br>    description, paragraphs 4-54 | 3, 7-8 |
| A | CN 110571427 A (ZHONGWEI NEW MATERIAL CO., LTD.) 13 December 2019 (2019-12-13)<br>    entire document | 1-11 |

Form PCT/ISA/210 (second sheet) (January 2015)

**INTERNATIONAL SEARCH REPORT**
Information on patent family members

International application No.

**PCT/CN2022/130946**

| Patent document cited in search report | | | Publication date (day/month/year) | Patent family member(s) | | | Publication date (day/month/year) |
|---|---|---|---|---|---|---|---|
| CN | 112490417 | A | 12 March 2021 | None | | | |
| CN | 111430700 | A | 17 July 2020 | WO | 2021068448 | A1 | 15 April 2021 |
| CN | 111463411 | A | 28 July 2020 | None | | | |
| CN | 111244397 | A | 05 June 2020 | None | | | |
| CN | 112811403 | A | 18 May 2021 | None | | | |
| CN | 110571427 | A | 13 December 2019 | None | | | |

Form PCT/ISA/210 (patent family annex) (January 2015)

**REFERENCES CITED IN THE DESCRIPTION**

**Patent documents cited in the description**

- CN 202111491138